# EUROPÄISCHE PATENTANMELDUNG

(11) **EP 1 398 967 A2**
(43) Veröffentlichungstag der Anmeldung: **17.03.2004**
(21) Anmeldenummer: 03020901.9
(22) Anmeldetag: 15.09.2003
(51) Int. Cl.: H04N 7/16, H04N 7/173

(54) **Computer und Netzwerk zur Bereitstellung eines Streamingportals**

(30) Priorität: 16.09.2002 DE 10243096
(71) Anmelder: THIEMANN, MICHAEL, 47805 KREFELD (DE); HANNEMANN, DIRK, 47802 KREFELD (DE)
(72) Erfinder: THIEMANN, MICHAEL, 47805 KREFELD (DE); HANNEMANN, DIRK, 47802 KREFELD (DE)
(74) Vertreter: Tönhardt, Marion, Dr.

(57) **Zusammenfassung**

Web-Seiten sehen in ihrer bisherigen Form, wenn sie auf einen Video-Stream verweisen, keine Darstellung desselben in einem Corporate-Design mit Wiedererkennungswert vor. Es soll deshalb die Möglichkeit geschaffen werden, ein übersichtlich gestaltetes und mit Wiedererkennungswert für einen Informationsanbieter versehenes Streamingportal bereitzustellen. Dies betrifft ein Streamingportal mit wenigstens einem Darstellungsrahmen, zur Wiedergabe von Multimedia-Informationen eines Programms eines Informationsanbieters, wobei die Multimedia-Informationen für das Streamingportal in Form von Multimedia-Daten zur Verfügung gestellt sind und die Multimedia-Daten zur Wiedergabe in Form einer Anzahl von Daten-Streams vorgesehen sind. Das hier vorgeschlagene Konzept sieht dabei vor, daß die Multimedia-Daten anhand von nach dem Programm ermittelten Strukturdaten in eine Anzahl von Stream-Einheiten unterteilt sind, wobei die Stream-Einheit mit einer die Art der in der Stream-Einheit enthaltenen Multimedia-Daten kennzeichnenden Markierung versehen ist und die Stream-Einheit zur Wiedergabe in Form eines Daten-Streams mit einem den Informationsanbieter, undvorteilhaft auch die Art, kennzeichnenden Darstellungsrahmen versehen ist. Insbesondere sind die Multimedia-Daten zur Wiedergabe auf dem Streamingportal in einem für alle Daten des Streamingportals gemeinsam gestalteten und den Informationsanbieter kennzeichnenden Darstellungsrahmen vorgesehen. Das Konzept führt auch auf eine Computervorrichtung und ein Verfahren zum Bereitstellen des Streamingportals, ein Computerprogrammprodukt, ein Computernetzwerk, ein erstes, zweites und drittes Computersystem und auf eine Verwendung des ersten, zweiten und dritten Computersystems gemäß dem Konzept.

## Beschreibung

Die Erfindung betrifft ein Streamingportal mit wenigstens einem Darstellungsrahmen, zur Wiedergabe von Multimedia-Informationen eines Programms eines Informationsanbieters, wobei die Multimedia-Informationen in Form von Multimedia-Daten zur Verfügung gestellt sind und die Multimedia-Daten zur Wiedergabe in Form einer Anzahl von Daten-Streams vorgesehen sind. Die Erfindung führt auch auf eine Computervorrichtung mit dem Streamingportal sowie auf ein Verfahren zum Bereitstellen des Streamingportals mit wenigstens einem Darstellungsrahmen zur Wiedergabe von Multimedia-Informationen eines Programms eines Informationsanbieters, wobei die Multimedia-Informationen für das Streamingportal in Form von Multimedia-Daten zur Verfügung gestellt werden, und die Multimedia-Daten in Form einer Anzahl von Daten-Streams wiedergegeben werden.

Die Erfindung betrifft ein Computerprogrammprodukt sowie ein computerlesbares Medium zur Speicherung des Computerprogrammprodukts.

Die Erfindung betrifft auch ein Computernetzwerk zum Bereitstellen des Streamingportals, mit wenigstens einem Darstellungsrahmen zur Wiedergabe von Multimedia-Informationen eines Programms eines Informationsanbieters, aufweisend: eine Empfangseinheit, über welche die Multimedia-Informationen zur Verfügung stellbar sind und eine Wandlereinheit, über welche die Multimedia-Informationen als Multimedia-Daten zur Verfügung stellbar sind, wobei die Multimedia-Daten zur Wiedergabe in Form einer Anzahl von Daten-Streams vorgesehen sind.

Des weiteren betrifft die Erfindung ein erstes, zweites und drittes Computersystem zum Bereitstellen eines Streamingportals mit wenigstens einem Darstellungsrahmen zur Wiedergabe von Multimedia-Informationen eines Programms eines Informationsanbieters, wobei die Multimedia-Informationen für das Streamingportal in Form von Multimedia-Daten zur Verfügung gestellt werden und die Multimedia-Daten zur Wiedergabe in Form einer Anzahl von Daten-Streams vorgesehen sind. Die Erfindung betrifft außerdem die Verwendung eines ersten, zweiten und dritten Computersystems.

Für einen Informationsanbieter im Internet ist es vorteilhaft, die von ihm zur Verfügung gestellten Daten übersichtlich und in einem Corporate-Design darzustellen. Dies ist insbesondere der Fall, wenn es sich um einen Informationsanbieter im Bereich Rundfunk, Radio, Fernsehen oder um einen sonstigen Nachrichtensender, also um einen Informationsanbieter handelt, der seine Informationen eigentlich auf anderem Wege als das Internet anbietet, das Internet jedoch ebenso nutzen möchte. Ein gutes Beispiel dafür bilden die Intemetseiten des WDR-Rundfunks unter wwv.wdr.de. Diese Art von WEB-Seite ist noch verbesserungswürdig. Ein Corporate-Design wird nur zum Teil verwirklicht.

Verweise auf Multimedia-Informationen, insbesondere Audio-Video-Informationen könnten übersichtlicher auf einem Streamingportal angebracht werden. Bei häufig und stark wechselndem Informationsangebot bedarf es allerdings eines erheblichen manuellen Aufwands, eine übersichtliche Darstellung im Corporate-Design zu gewährleisten. Dies wird insbesondere nicht für eine audio-visuelle Medienwiedergabe umgesetzt. Dieser manuelle Aufwand kann durch geeignete technische Maßnahmen erheblich verringert werden.

Übliche WEB-Seiten wie z. B. www.apple.com haben gar kein Corporate-Design, wenn ein Verweis auf einen Video-Stream oder andere audiovisuelle oder Multimedia-Daten verknüpft wird. Im allgemeinen sind beliebig und deshalb recht unübersichtlich angebrachte separate Links zur Wiedergabe eines Video-Streams vorgesehen. Dieser erscheint dann in einem Fenster eines Wiedergabetools mittels dem die Wiedergabe des Video-Streams erfolgt, allerdings ohne Corporate-Design, was zum Nachteil des Informationsanbieters ist.

Konkret heißt das, daß bei allen bisher bekannten WEB-Seiten im Internet beim Abruf von audiovisuellen Medien lediglich ein neutrales Fenster eines Wiedergabetools, zum Beispiel ein Real-Player-"Fenster", ohne Bezug auf den Informationsanbieter erscheint. Es gibt üblicherweise auch keinen Wiedererkennungseffekt zu einem bestimmten Thema des Anbieters, z. B. einer Sendereihe einer Rundfunkstation oder eines Femsehsenders.

Insbesondere für private oder öffentliche Informationsanbieter aus dem Bereich Rundfunk und Fernsehen besteht also das Problem, das eigene Programm, d. h. den Programminhalt, also insbesondere bewegte Bilder oder Tonfolgen, als Stream in einem effektiv, d. h. übersichtlich und mit Wiedererkennungswert versehenen und einheitlich gestalteten Portal programmbegleitend und automatisch umzusetzen.

An dieser Stelle setzt die Erfindung an, deren Aufgabe es ist, ein Streamingportal, eine Vorrichtung mit einem Streamingportal, ein Verfahren und eine Vorrichtung zum Bereitstellen des Streamingportals, ein Computerprogrammprodukt sowie eine Verwendung einer Computervorrichtung zum Bereitstellen, insbesondere Anbieten, Umsetzen und/oder interaktiven Nutzen, eines Streamingportals, anzugeben, wobei die Bereitstellung auf effektive Weise erfolgen soll und das Streamingportal einen Wiedererkennungswert für den Informationsanbieter gewährleisten soll.

Betreffend das Streamingportal wird die Aufgabe durch die Erfindung mit einem Streamingportal der eingangs genannten Art gelöst, bei dem erfindungsgemäß vorgesehen ist, daß
- die Multimedia-Daten anhand von nach dem Programm ermittelten Strukturdaten in eine Anzahl von Stream-Einheiten unterteilt sind, wobei eine Stream-Einheit mit einer die Art der in der Stream-Einheit enthaltenen Multimedia-Daten kennzeichnenden Markierung versehen ist und die Stream-Einheit zur Wiedergabe in Form eines Daten-Streams mit einem den Informationsanbieter kennzeichnenden Darstellungsrahmen versehen ist.

Um Verwechslungen mit dem Begriff des "Computerprogramms" zu vermeiden, ist in den Ansprüchen statt dem Begriff "Programm" der Begriff "Programminhalt" benutzt worden.

Unter einem Streamingportal wird im Sinne dieser Anmeldung eine Wiedergabeplattform und ein Datenpool für Informationen verstanden, das insbesondere auf einem Netzwerk beliebiger Art wiedergebbar ist (z. B. Internet, Intranet, WAN, LAN) und mittels einzelnen und/oder einer funktionierenden Gesamtheit einer Anzahl von verknüpften Portalseiten (Wiedergabefenstem, Darstellungsrahmen) Informationen in beliebiger Form (Text, Bild, Audio, Video) wiedergebbar und/oder abrufbar macht, wobei der Gesamtheit ein Computerprogramm (z. B. automatisch oder zusätzlich manuell generiert) hinterlegt ist und eines oder mehrere Wiedergabetools implementiert ist. Das Streamingportal im Sinne dieser Anmeldung geht also über eine bloße Datenbank und/oder deren Bildschirmdarstellung hinaus und umfaßt als funktionierende Gesamtheit die technische Verknüpfung hinterlegter Computerprogramme und Wiedergabe-Tools. Die Funktionalität des Streamingportals kann auch bei einer einzelnen Portalseite verwirklicht sein, so daß unter einem Streamingportal im Sinne dieser Anmeldung auch eine einzelne Portalseite verstanden wird. Neben den obengenannten Netzwerken kommen für die Anwendung des vorgeschlagenen Konzepts zur Bereitstellung des Streamingsportals auch mobile und/oder Funknetzwerke, insbesondere Breitbandnetzwerke wie UMTS, zur Anwendung.

Bei den Informationen handelt es sich insbesondere um Multimedia-Informationen, d. h. zum Beispiel laufende Animationen und/oder Audio- oder Video-Informationen, die insbesondere bereits Gegenstand einer Sendeübertragung außerhalb eines Netzwerkes waren oder sind, die also zunächst in analoger Form vorliegen können aber auch bereits digital vorliegen können. Multimedia-Informationen enthalten alle Art von dynamisch generierten Sequenzen, insbesondere Bildsequenzen und/oder Tonsequenzen. Diese könnten, wie eine Animation, auch live generiert sein oder vorbereitet vorliegen.

Zusätzlich können weitere Informationen als weitere Daten in Form von Text, Grafik oder einem Bild sowie Verknüpfungen in einem Darstellungsrahmen vorhanden sein. Solche übliche Daten werden in einem Darstellungsfenster oder Rahmen, also einer Seite oder einem Fenster, auf dem Streamingportal dargestellt. Zur Wiedergabe von Multimedia-Informationen eignen sich besonders eine Reihe von Wiedergabetools, z. B. der Real-Player. D. h., unter einem Wiedergabetool wird ein Mittel zum Laden, Abspielen und Darstellen eines Audio-Video-Streams, gegebenenfalls unter Einflußnahme auf den Abspielvorgang verstanden. Unter einem Stream sind grundsätzlich alle Daten zu verstehen, die unter Maßgabe eines erforderlichen zeitlichen Ablaufs wiedergegeben werden müssen und so zum Beispiel laufende Bilder oder Tonfolgen wiedergeben. Das Darstellen des Video-Streams erfolgt üblicherweise in einem Wiedergabefenster oder Darstellungsrahmen. Unter Darstellungsrahmen wird im Sinne dieser Anmeldung nicht nur das bloße Fenster (Englisch: window), sondern insbesondere das gesamte Layout inklusive weiterer Applikationen, die innerhalb des Rahmens oder am Rahmen, insbesondere zum Zwecke des Corporate-Designs, vorgesehen sind, verstanden.

Das wesentliche Konzept der vorliegenden Erfindung liegt also darin, ein Streamingportal zu etablieren, das ein für alle Nutzer durchgängiges Navigationskonzept aufweist und somit übersichtlich gestaltet und mit einem Wiedererkennungswert für den Informationsanbieter versehen ist. Vereinfacht gesagt verwirklicht das Konzept insbesondere einen Netzwerk-Sender, d. h. einen "Fernsehsender" auf einem geeigneten Netzwerk, mit einer für den Nutzer durchgängigen Navigation und Wiedererkennungswert für den Informationsanbieter. Dies könnte beispielsweise ein WEB-Sender auf dem Internet sein. Die Erkenntnis der Erfindung liegt darin, daß eine geeignete Hardware- und Softwareumgebung sowie insbesondere eine damit abgestimmte Aufbereitung und Verarbeitung von Datenmaterial in der Lage ist, das Streamingportal zu etablieren, und zwar auf eine sehr effektive und größtenteils automatische Weise. Die entsprechenden Vorrichtungen, Verfahren und Verwendungen entsprechend der Erfindung werden im folgenden beschrieben. Die Erfindung sieht zunächst die oben angegebene automatische Struktur-Ermittlung der Multimedia-Daten und eine dementsprechende Unterteilung derselben vor und die automatische Markierung und dementsprechende Kennzeichnung derselben zur Wiedergabe derselben in Form eines Daten-Streams mit einem den Informationsanbieter kennzeichnenden Darstellungsrahmen. Dabei ist es besonders günstig, wenn die Stream-Einheit zur Wiedergabe in Form eines Daten-Streams auch mit einem die Art der Multimedia-Daten kennzeichnenden Darstellungsrahmen versehen ist.

Die Erfindung führt auf eine Computervorrichtung mit dem genannten Streamingportal zur Wiedergabe von Multimedia-Informationen eines Programms eines Informationsanbieters auf dem Streamingportal. Weiter führt die Erfindung auch auf ein Verfahren zum Bereitstellen des Streamingportals, ein entsprechendes Computerprogrammprodukt sowie auf Computervorrichtungen zum Bereitstellen des Streamingportals. Dies wird im Einzelnen weiter unten beschrieben.

Zunächst werden vorteilhafte Weiterbildungen der Erfindung betreffend das Streamingportal gemäß den Streamingportal-Unteransprüchen beschrieben. Diese geben im einzelnen vorteilhafte Möglichkeiten an, das Streamingportal zu realisieren.

Vorzugsweise werden alle Daten auf dem Streamingportal, insbesondere die Multimedia-Daten, in einem für die Daten gemeinsam gestalteten und den Informationsanbieter kennzeichnenden Darstellungsrahmen wiedergegeben. Ein entsprechender Darstellungsrahmen kann für jede Stream-Einheit vorgesehen sein. Dies sichert den Wiedererkennungswert bei einem Anwender.

Insbesondere handelt es sich bei dem Programm um ein Femseh- und/oder Rundfunkprogramm eines Informationsanbieters. Vor allem läßt sich eine Anzahl vorbestimmter Kriterien zur Ermittlung der Strukturdaten am Programm selbst festmachen. Dies betrifft insbesondere eines oder mehrere der folgenden Kriterien. Ein Kriterium wäre z. B. die Zeit, d. h. insbesondere Sendezeit oder Dauer der Sendung. D. h. die Struktur des Programms ließe sich anhand der Sendezeiten festmachen. Jede Stream-Einheit würde durch eine Sendung gebildet. Die Anzahl von Stream-Einheiten würde entsprechend der Sendezeit und Sendelänge der Sendungen strukturiert.

Weiter könnte eine Strukturierung anhand von thematischen Gesichtspunkten erfolgen. So könnten beispielsweise Multimedia-Daten betreffend Nachrichten, Spielfilme, Serien oder anderen thematischen Gesichtspunkten strukturiert werden.

In analoger Weise könnte eine Strukturierung hinsichtlich eines besonders bekannten Darstellers oder eines Produzenten oder eines Regisseurs erfolgen.

Es könnten Strukturierungen hinsichtlich lokaler Kriterien erfolgen. Beispielsweise könnten Sendungen, die für eine gewisse Region, z. B. ein Bundesland oder ein Gebiet, relevant sind, zu einem Strukturpunkt zusammengefaßt werden.

Ebenso könnten hochaktuelle Sendungen unter einem gewissen Strukturpunkt zusammengefaßt werden.

Sendungen in nicht deutscher Sprache, z. B. in Französisch, Niederländisch oder Englisch, könnten, z. B. vor allem als Angebot für Grenzregionen Deutschlands, zusammen strukturiert werden.

Eine jede solche Gruppe kann vorteilhaft mit einer charakteristischen Kennzeichnung versehen werden. D. h. die Steim-Einheit wird mit einem die Art der in der Stream-Einheit enthaltenen Multimedia-Informationen kennzeichnenden Darstellungsrahmen versehen. Hier bietet sich im Rahmen der technischen Möglichkeiten vor allem die Gestaltungsweise des Darstellungsrahmens selbst an. Es könnte aber auch ein besonderes Icon für eine bestimmte Art von Multimedia-Daten vorgesehen werden. So könnte beispielsweise ein besonders gestaltetes Icon für Vormittagssendungen, Nachmittagssendungen oder Abendsendungen als Kennzeichen für einen dafür vorgesehenen Darstellungsrahmen dienen. Es könnte auch ein eine gewisse Region bezeichnendes Icon gewählt werden oder lokale Kriterien hinsichtlich der Daten genutzt werden. Weitere Möglichkeiten bieten sich, wenn ein für eine Sendung charakteristisches Icon in die Gestaltungsweise des Darstellungsrahmens mit einbezogen wird bzw. eingeblendet wird. Die Stream-Einheit der entsprechenden Sendung wird so in einem für die Sendung charakteristischen Gestaltungsrahmen wiedergegeben.

Weitere Möglichkeiten der Kennzeichnung bieten sich, um die Stream-Art als solche charakteristisch zu kennzeichnen. Ebenso läßt sich auch die Gestaltungsweise des Darstellungsrahmens auf die Stream-Art anpassen - je nachdem, ob es sich bei der Stream-Art als solche um einen Audio-, Video-, Live-, TV-, Interaktiv-Stream oder eine allgemeine Streaming-Einheit wie eine Animation oder ähnliches handelt. Die Stream-Art bezeichnet also wenigstens das Wesen der dynamischen Sequenz. Unter Stream-Art kann wie oben aufgeführt auch die Art des Inhalts bezeichnet sein.

Es erweist sich als besonders vorteilhaft, wenn derartige Kennzeichnungen bereits auf der Eingangsseite des Streamingportals vorgesehen sind. Insbesondere könnte die Eingangsseite ein Menü aufweisen, welches Streaming-Kanäle, TV-Angebote, Livestream-Angebote, Audio-Angebote, Interaktiv-Angebote oder aktuelle Meldungen zur Auswahl anbietet.

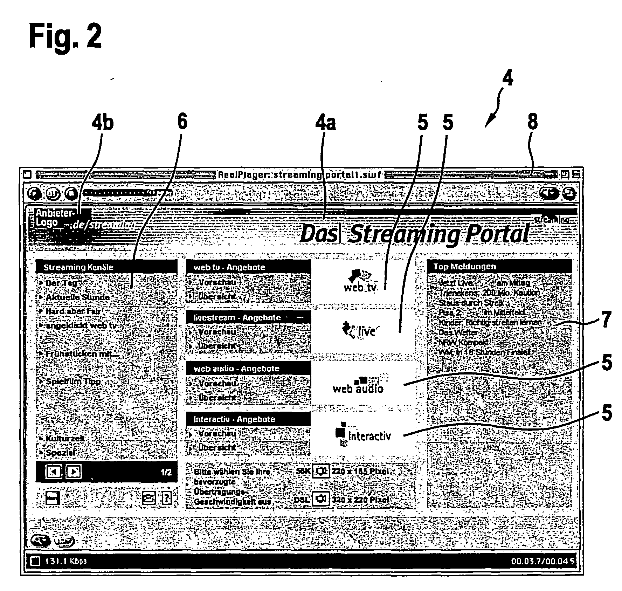

Im einzelnen sind die vorgenannten Weiterbildungen anhand der Figuren 2 bis 4 für die bevorzugte Ausführungsform eines Intemetportals im Detail beispielhaft deutlich gemacht.

Es erweist sich weiter als vorteilhaft, jeweils einer Sendung des Programms eine Anzahl von Darstellungsrahmen auf dem Streamingportal zuzuordnen.

Das Streamingportal läßt sich insbesondere auch mit einem übrigen und üblichen Netzwerk-, insbesondere Internet-Angebot verknüpfen. Beispielsweise könnten übliche Internetseiten eine Verknüpfung zum Streamingportal aufweisen.

In einer besonders bevorzugten Weiterbildung des vorgeschlagenen Streamingportals enthält der jeweils einer Sendung des Programms zugeordnete Darstellungsrahmen eine weitere Verknüpfung, die Multimedia-Daten zur Verfügung stellt, welche die Sendung betreffen und über die Sendung hinausgehen. So könnten auf besonders vorteilhafte Weise Zusatzinformationen zu einer Sendung des Programms vom Informationsanbieter auf dem Internet zur Verfügung gestellt werden, welche im übrigen Sendeprogramm des Informationsanbieters nicht vorgesehen sind. Hier könnten beispielsweise ergänzende Pressemitteilungen oder Zusatzinterviews oder Meinungsumfragen zu einer Sendung als Stream-Einheit zur Verfügung gestellt werden. Auch könnten Texte zu einem Film, Kapitelunterteilungen und weitere Links vorgesehen sein. Beispielsweise könnten über solche Links einzelne "Kapitel" eines Films direkt angewählt werden.

Insbesondere erweist es sich als vorteilhaft, daß eine Anzahl von Darstellungsrahmen gruppiert und die Anzahl einer Sendung zugeordnet ist. Anstatt einer Sendung könnte die Anzahl auch einen bestimmten Themenkomplex oder einem anderen Programminhalt mit gemeinsamen Merkmalen zugeordnet sein. Insbesondere könnte für die Gruppierung eine der Sendung entsprechende Gestaltungsweise vorgesehen sein. So läßt sich einerseits ein besonders übersichtlich und effektiv gestaltetes Streamingportal darstellen. Zum anderen bietet dies die Möglichkeit, den Wiedererkennungswert durch entsprechende Kennzeichnung der Art der in einer Stream-Einheit enthaltenen Multimedia-Daten und des Informationsanbieters zu erhöhen.

Ein Darstellungsrahmen läßt sich insbesondere auch mehrsprachig aufbauen.

Die vorgenannte Verknüpfung und Ausführung des kennzeichnenden Darstellungsrahmens ist das Ergebnis der hinterlegten Strukturierung und Markierung der Multimedia-Daten. Dies erfolgt gemäß der Erfindung mittels einem Verfahren der eingangs genannten Art, in dem erfindungsgemäß
- eine Struktur der Multimedia-Informationen nach dem Programm ermittelt und in Form von Strukturdaten zur Verfügung gestellt wird,
- die Multimedia-Daten anhand der Strukturdaten in eine Anzahl von Stream-Einheiten unterteilt werden,
- eine Stream-Einheit mit einer die Art der in der Stream-Einheit enthaltenen Multimedia-Daten kennzeichnenden Markierung versehen wird, und
- die Stream-Einheit mit einem den Informationsanbieter kennzeichnenden Darstellungsrahmen zur Wiedergabe in Form eines Daten-Streams versehen wird.

Vorteilhaft wird die Stream-Einheit auch mit einem die Art der in der Stream-Einheit enthaltenen Multimedia-Daten kennzeichnenden Darstellungsrahmen versehen. Die Struktur der Multimedia-Informationen wird günstigerweise, je nach Bedarf, anhand bestimmter Kriterien vorgegeben. Die Strukturdaten werden dann günstigerweise in Form einer automatisch erstellten, jedenfalls aber manuell beeinflußbaren Datei zur Verfügung gestellt. Alle weiteren Verfahrensschritte können dann größtenteils automatisch oder vollautomatisch auf einer geeigneten Vorrichtung in gesteuerter Weise ablaufen.

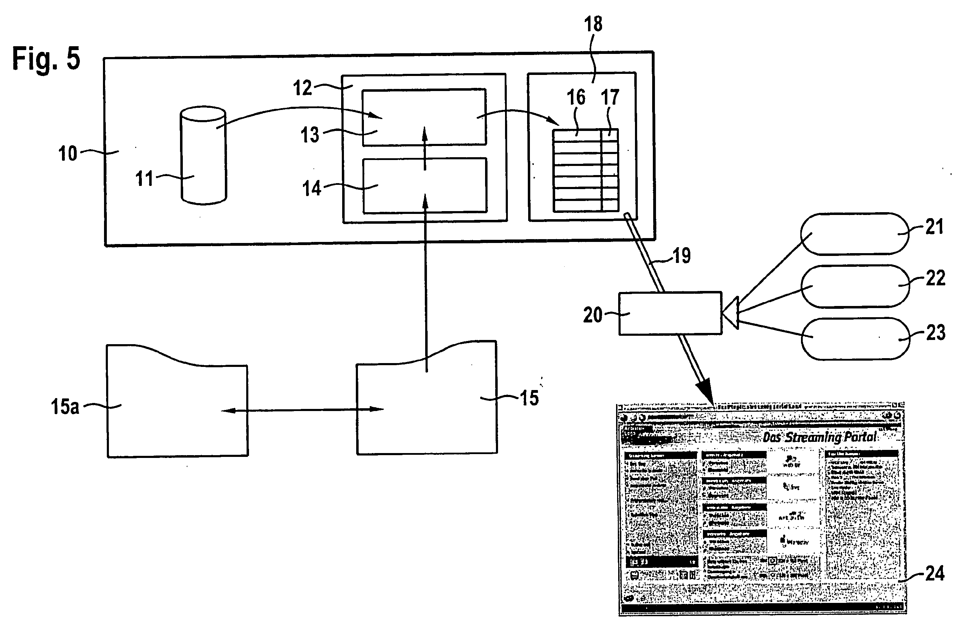

Vorteilhafte Weiterbildungen der Erfindung hinsichtlich des Verfahrens sind den Verfahrensunteransprüchen zu entnehmen und geben im einzelnen vorteilhafte Möglichkeiten an, zum einen die Multimedia-Informationen eines Informationsanbieters zur Verfügung zu stellen und zum anderen die Multimedia-Daten anhand der Strukturdaten in eine Anzahl von Stream-Einheiten zu unterteilen. Dies kann technisch in besonders bevorzugter Weise erfolgen. Im einzelnen ist eine besondere bevorzugte Ausführungsform des Verfahrens beispielhaft anhand der Figuren 5 bis 7 dargestellt.

Insbesondere werden die Multimedia-Daten auf dem Streamingportal in einem für alle Daten des Streamingportals gemeinsam und für den Informationsanbieter charakteristisch gestalteten Darstellungsrahmen wiedergegeben. Bei der Wiedergabe für den Benutzer des Portals wird der Wiedererkennungswert aufgrund eines Corporate-Designs des Anbieters durchgängig auf dem Portal vorhanden sein.

Die Multimedia-Informationen für das Streamingportal könnten beispielsweise über eine Empfangseinheit einem Computernetzwerk zugeführt werden, zu Multimedia-Daten analog/digital oder digital/digital gewandelt werden und so für das Streamingportal zur Verfügung gestellt werden. Die Multimedia-Daten würden dann vorteilhaft in Form einer Anzahl von Daten-Streams wiedergegeben werden. Anhand des Programms läßt sich eine Struktur der Multimedia-Informationen ermitteln. Beispielsweise könnte dies eine der im Zusammenhang mit dem Streamingportal wie oben erläuterte Struktur (zum Beispiel anhand von Zeit, Thema, Darsteller, Produzent, Regie, lokalen Kriterien, Sprache und Aktualität) sein. Die Stream-Einheiten würden entsprechend unterteilt werden und jede Streameinheit mit einer Markierung oder einem Label versehen werden. Diese könnte ein Code oder eine Nummer sein. Auf diese Weise könnte eine beliebige Teilmenge oder auch das gesamte Programm eines Informationsanbieters automatisch digitalisiert, strukturiert und sinnvoll nach vorgegebenen Kriterien des Programms unterteilt werden und dann in Form von Stream-Einheiten, vorzugsweise in Form einer Datenbank für Stream-Einheiten, in markierter Form, hinterlegt werden. Dieses Verfahren zur Strukturierung und markierten Hinterlegung des Programms eines Informationsanbieters könnte automatisch unter Steuerung einer Software auf einer Hardware-Einheit ablaufen. Der auf diese Weise geschaffene, d. h. strukturierte und pro Stream-Einheit mittels der Markierung gekennzeichnete, Datenpool stellt somit die Basis für das Bereitstellen des oben beschriebenen Streamingportals dar.

Entsprechend der Markierung einer Stream-Einheit, von vorzugsweise jeder der Anzahl von Stream-Einheiten, wird die Stream-Einheit in einem die Art der in der Stream-Einheit enthaltenen Multimedia-Daten kennzeichnenden Darstellungsrahmen mittels eines Daten-Streams wiedergegeben. Bei Aufruf der entsprechenden Stream-Einheit würde entsprechend der Markierung das Layout und die Darstellungsweise i. e. der Darstellungsrahmen samt weiterer Icons oder Kennzeichnungssymbole, bereits hinterlegt sein und automatisch abrufbar sein. Jede Stream-Einheit wird dann automatisch vorzugsweise mit einer für die Art der in der Stream-Einheit enthaltenen Multimedia-Daten charakteristischen Darstellungsweise, jedenfalls aber mit einem für den Informationsanbieter charakteristisch gestalteten Darstellungsrahmen versehen.

Auch alle weiteren Daten außer den Multimedia-Daten auf dem Streamingportal werden vorzugsweise in einem für alle Daten gemeinsamen und für den Informationsanbieter charakteristisch gestalteten Darstellungsrahmen wiedergegeben. Dies betrifft beispielsweise eine Farb- und akustische Gestaltung für einen Darstellungsrahmen.

Das Verfahren ermöglicht also erstmalig, daß zum einen ein beliebig ausgewählter Teil des Programms oder des gesamten Programms eines Informationsanbieters automatisch strukturiert und je nach Art einer Multimedia-Information markiert wird. Die dafür vorgesehenen Strukturdaten können anhand von Show-View und/oder Meta-Daten in erheblichem Umfang zur Verfügung gestellt werden. Dies ermöglicht eine breite Palette von Strukturierungsmöglichkeiten bei der Aufbereitung des Programms und bei der Auswahl eines späteren Anwenders (im folgenden auch Client) oder Nutzers (im folgenden auch User). Des weiteren kann das Layout zur Wiedergabe einer Stream-Einheit nach Maßgabe des Informationsanbieters, ebenfalls automatisch, beispielsweise durch eine Steuersoftware, aktualisiert zur Wiedergabe einer Stream-Einheit vorgesehen sein und redaktionell angepaßt werden.

Vorteilhafterweise werden die Multimedia-Informationen für das Streamingportal mittels einer Empfangseinheit zur Verfügung gestellt. Dies könnte beispielsweise eine Antenne, insbesondere eine Satellitenempfangseinheit, oder ein Kabelreceiver sein. Die Umsetzung in digitalisiertes Informationsmaterial in Form von Multimedia-Daten erfolgt günstigerweise über einen Analog-Digitalwandler. Alternativ oder zusätzlich könnten auch Multimedia-Daten oder weitere Daten des Informationsanbieters über einen Datenspeicher und/oder ein Netzwerk, z. B. das Internet, zur Verfügung gestellt werden. D. h. die Multimedia-Daten oder Daten könnten auf einem Festplattendatenspeicher oder anderweitig auf einem Server oder einer Computereinheit abgelegt sein. Ebenso könnten Daten und/oder Multimedia-Daten des Informationsanbieters per Datenübertragung über ein Netzwerk, z. B. das Internet, elektronisch übermittelt werden, zum Beispiel per Email. Unabhängig von der Art der Datenübermittlung kann das Informationsmaterial auch bereits in Form von digitalem Material vorliegen. Der Wandler könnte auch eine Digital-digital-Wandlereinheit sein.

In einer besonders günstigen Weiterbildung wird zusammen mit den Multimedia-Informationen das Programm des Informationsanbieters zur Verfügung gestellt. So werden auf vorteilhafte Weise auch Kriterien zur Strukturierung des Programms mit dem Programm selbst geliefert.

Es ist weiterhin günstig, daß die Einordnung der Stream-Einheit in die Struktur gemäß einem Header der Stream-Einheit erfolgt. D. h. die Markierung erfolgt günstigerweise im Header der Stream-Einheit. So würde beim Aufruf einer Stream-Einheit zunächst der Header derselben gelesen. Aus dem Header ließe sich dann aufgrund der Markierung sofort entnehmen, welcher Art die in der Stream-Einheit enthaltene Multimedia-Information ist. Auf diese Weise wird beim Aufruf der Stream-Einheit datentechnisch auch sofort der zur Wiedergabe der Stream-Einheit vorgesehene Darstellungsrahmen mit allen dazugehörigen und den Wiedererkennungswert steigernden sonstigen Applikationen, wie ein Icon oder ein akustischer Hintergrund, aufgerufen werden. Das Programm könnte jedoch auch separat von den Multimedia-Informationen zur Verfügung gestellt werden, beispielsweise über eine Netzwerkleitung oder Funkverbindung, beispielsweise in Form einer Show-View-Datei. Solche Informationen liegen üblicherweise schon in passender Form auf einem Netzwerk, z. B. dem Internet, bereit und könnten auf diese Weise direkt genutzt werden.

Das Streamingportal kann selbstverständlich auch so aufgebaut werden, daß es das Programm einer Gruppe von Informationsanbietern wiedergibt. Dies hat Vorteile, wenn mehrere Programmanbieter in gewissen Teilen ihres Programms oder auch grundsätzlich zusammenarbeiten.

Die Erfindung führt auf ein Computerprogrammprodukt, welches auf einem computerlesbaren Medium speicherbar ist und einen Softwarecode-Abschnitt aufweist, welcher geeignet ist, eine Computervorrichtung zur Wiedergabe von Multimedia-Informationen eines Programms eines Informationsanbieters auf einem oben dargestellten Streamingportal, zu veranlassen, wenn dieses Computerprogrammprodukt auf der Computervorrichtung ausgeführt wird.

Die Erfindung führt auch auf ein Computerprogrammprodukt, welches auf einem computerlesbaren Medium speicherbar ist und einen Softwarecode-Abschnitt aufweist, welcher geeignet ist, eine Computervorrichtung zur Ausführung des Verfahrens, wie oben beschrieben, zu veranlassen, wenn dieses Computerprogrammprodukt auf der Computervorrichtung ausgeführt wird.

Die Erfindung führt auch auf ein computerlesbares Medium, auf dem eines der oben beschriebenen Computerprogrammprodukte gespeichert ist.

Betreffend die Vorrichtung, wird die Aufgabe durch die Erfindung mittels einem Computernetzwerk zum Bereitstellen eines Streamingportals der eingangs genannten Art gelöst, das erfindungsgemäß aufweist:
- mindestens ein Computersystem,
   - auf dem eine nach dem Programm ermittelte Struktur der Multimedia-Informationen in Form von Strukturdaten zur Verfügung gestellt ist,
   - auf dem die Multimedia-Daten anhand der Strukturdaten in eine Anzahl von Stream-Einheiten unterteilbar sind,
   - auf dem eine Stream-Einheit mit einer die Art der in der Stream-Einheit enthaltenen Multimedia-Daten kennzeichnenden Markierung versehbar ist, und
   - auf dem die Stream-Einheit mit einem den Informationsanbieter kennzeichnenden Darstellungsrahmen versehbar ist.

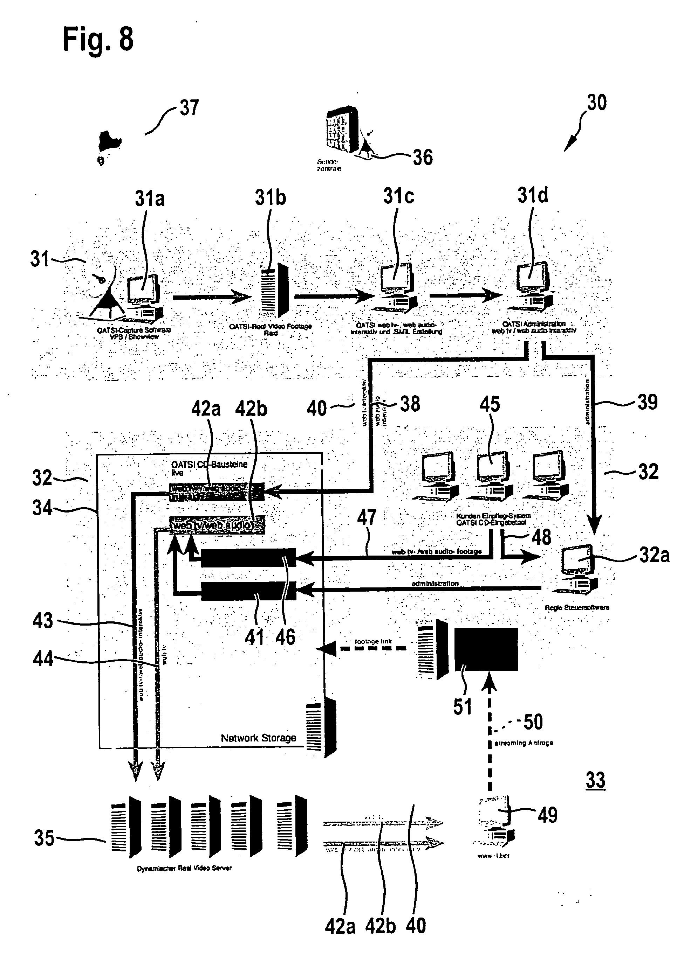

Vorteilhafte Weiterbildungen sind den Unteransprüchen zum Computemetzwerk zu entnehmen. Details des Computemetzwerks werden anhand einer bevorzugten Ausführungsform im Zusammenhang mit Figur 8 beispielhaft erläutert.

Vorzugsweise ist die Stream-Einheit mit einem die Art der in der Stream-Einheit enthaltenen Multimedia-Daten kennzeichnenden Darstellungsrahmen versehbar.

Günstigerweise weist das Computernetzwerk ein Computersystem auf, auf dem Daten des Streamingportals in einem für die Daten gemeinsamen und für den Informationsanbieter charakteristisch gestalteten Darstellungsrahmen wiedergebbar sind. Dies ist vor allem der Fall für ein Computersystem des Kunden (Client) oder des Nutzers (User).

Insbesondere ist es günstig, daß die Anzahl von Stream-Einheiten gruppiert sind, in Kategorien bestehend aus: Streaming, Audio, Interaktiv, Live oder TV. Dies stellt lediglich eine bevorzugte Auswahl von Kategorien dar. Es können selbstverständlich andere oder darüber hinausgehende Kategorien genutzt werden. Die genannten Kategorien eignen sich insbesondere, um eine Datenübermittlung zwischen Computereinheiten oder Computersystemen des Netzwerks in separaten Datenflüssen entsprechend der Kategorien vorzunehmen. Günstigerweise ist dazu ein erster Kanal für Live-Daten vorgesehen, ein zweiter Kanal für TV/Audio-Daten und ein dritter Kanal speziell für WEB-TV-Daten. Die Computereinheiten oder Computersysteme des Computernetzwerks sind vorteilhaft über ein Netzwerk, z. B. das Internet oder ein mobiles Netzwerk, verbunden. Es eignet sich vorteilhaft für das Computemetzwerk sowohl eine LAN- als auch eine WAN-Umgebung.

Insbesondere kann das Computernetzwerk günstigerweise auch eine Sendeeinheit zur Abwicklung von Livesendungen aufweisen. Als besonders günstig erweist sich dabei zum Beispiel ein Studio zum Senden von Livesendungen. Auf diese Weise kann im Zusammenhang mit einer auf übliche Weise produzierten Sendung des Informationsanbieters speziell auch eine Intemet-Zusatzsendung produziert und lediglich für das Internet vorgesehen auf dem Streaming-Portal wiedergegeben werden.

Betreffend die Vorrichtung wird die Aufgabe durch die Erfindung auch gelöst mittels eines ersten Computersystems zum Bereitstellen eines Streamingportals mit wenigstens einem Darstellungsrahmen zur Wiedergabe von Multimedia-Informationen eines Programms eines Informationsanbieters, aufweisend
- eine Empfangseinheit, über welche die Multimedia-Informationen zur Verfügung stellbar sind,
- eine Wandlereinheit, über welche die Multimedia-Informationen als Multimedia-Daten zur Verfügung stellbar sind, wobei die Multimedia-Daten zur Wiedergabe in Form einer Anzahl von Daten-Streams vorgesehen sind,
das erfindungsgemäß
- als Capture-System ausgebildet ist, und
- auf dem eine nach dem Programm ermittelte Struktur der Multimedia-Informationen in Form von Strukturdaten zur Verfügung gestellt ist,
- auf dem die Multimedia-Daten anhand der Strukturdaten in eine Anzahl von Stream-Einheiten unterteilbar sind,
- auf dem eine Stream-Einheit mit einer die Art der in der Stream-Einheit enthaltenen Multimedia-Daten kennzeichnenden Markierung versehbar ist, derart, daß die Stream-Einheit mit einem den Informationsanbieter kennzeichnenden Darstellungsrahmen versehbar ist.

Betreffend die Verwendung wird die Aufgabe durch die Erfindung auch gelöst mittels der Verwendung eines ersten Computersystems zum Bereitstellen eines Streamingportals mit wenigstens einem Darstellungsrahmen zur Wiedergabe von Multimedia-Informationen eines Programms eines Informationsanbieters, wobei
- die Multimedia-Informationen für das Streamingportal in Form von Multimedia-Daten zur Verfügung gestellt werden und
- die Multimedia-Daten zur Wiedergabe in Form einer Anzahl von Daten-Streams vorgesehen sind,
das erfindungsgemäß
- als Capture-System verwendet wird. In dem Capture-System wird
- eine Struktur der Multimedia-Daten nach dem Programm ermittelt und in Form von Strukturdaten zur Verfügung gestellt,
- die Multimedia-Daten anhand der Strukturdaten in eine Anzahl von Stream-Einheiten unterteilt und
- eine Stream-Einheit mit einer für die Art der in der Stream-Einheit enthaltenen Multimedia-Daten kennzeichnenden Markierung versehen, so daß die Stream-Einheit zur Wiedergabe in Form eines Daten-Streams mit einem den Informationsanbieter kennzeichnenden Darstellungsrahmen versehbar ist.

Dazu eignet sich insbesondere ein Capture-System, das u. a. aufweist: eine Capture-Software, Video-Footage-Raid, insbesondere ein Real-Video-Footage-Raid, eine SMIL-Software-Erstellung und eine Administrator-Einheit.

Das Capture-System ist also speziell ausgebildet, um eine Struktur der Multimedia-Informationen zu ermitteln und eine strukturierte und entsprechend markierte Datenansammlung von Multimedia-Daten, in Form einer Anzahl von unterteilten Stream-Einheiten unterteilt, zur Verfügung zu stellen. Die Capture-Software dient insbesondere zum Empfang der Multimedia-Informationen. Das Real-Video-Footage-Raid und die SMIL-Software-Erstellung ermöglicht die Erstellung der Rohdaten als Multimedia-Daten und die Strukturierung derselben anhand einer geeigneten Strukturinformation aus dem Programm. Die Administrator-Einheit dient zur Steuerung und Überwachung dieses im übrigen automatisch ablaufenden Vorgangs und ermöglicht die Verknüpfung des Capture-Systems mit einem zweiten Computersystem.

Betreffend die Vorrichtung wird die Aufgabe durch die Erfindung mittels eines zweiten Computersystems zum Bereitstellen eines Streamingportals mit wenigstens einem Darstellungsrahmen zur Wiedergabe von Multimedia-Informationen eines Programms eines Informationsanbieters gelöst, dem
- die Multimedia-Informationen in Form von Multimedia-Daten zur Verfügung gestellt sind, wobei
- die Multimedia-Daten zur Wiedergabe in Form einer Anzahl von Daten-Streams vorgesehen sind, und
bei dem erfindungsgemäß
- die Multimedia-Daten anhand von nach dem Programm ermittelten Strukturdaten in eine Anzahl von Stream-Einheiten unterteilt sind, wobei
- eine Stream-Einheit mit einem die Art der in der Stream-Einheit enthaltenen Multimedia-Daten kennzeichnenden Markierung versehen ist, und
- das zweite Computersystem als Client-System ausgebildet ist, auf dem die Stream-Einheit mit einem den Informationsanbieter kennzeichnenden Darstellungsrahmen versehbar ist.

Betreffend die Verwendung wird die Aufgabe durch die Erfindung auch mittels der Verwendung eines zweiten Computersystems zum Bereitstellen eines Streamingportals mit wenigstens einem Darstellungsrahmen zur Wiedergabe von Multimedia-Informationen eines Programms eines Informationsanbieters, dem
- die Multimedia-Informationen für das Streamingportal in Form von Multimedia-Daten zur Verfügung gestellt werden, wobei
- die Multimedia-Daten zur Wiedergabe in Form einer Anzahl von Daten-Streams vorgesehen sind,
gelöst,
das erfindungsgemäß
als Client-System verwendet wird. Dabei sind die Multimedia-Daten anhand von nach dem Programm ermittelten Strukturdaten in eine Anzahl von Stream-Einheiten unterteilt, wobei eine Stream-Einheit mit einem die Art der in der Stream-Einheit enthaltenen Multimedia-Daten kennzeichnenden Markierung versehen ist. Auf dem Client-System wird die Stream-Einheit mit einem die Art der in der Stream-Einheit enthaltenen Multimedia-Daten und den Informationsanbieter kennzeichnenden Darstellungsrahmen versehen.

Auf dem Client-System wird also die strukturierte und entsprechend markierte Rohinformation in Form der Multimedia-Daten weiterverarbeitet. Dies ist vor allem eine redaktionelle Weiterverarbeitung und eine Weiterverarbeitung hinsichtlich der Darstellung in einem den Informationsanbieter kennzeichnenden Layout. Dies wird vorteilhaft gemäß einem vorgegebenen Standard automatisch bewerkstelligt. Im Prinzip kann die Weiterverarbeitung auch mittels des ersten Computersystems vorgenommen werden.

Günstigerweise weist allerdings gemäß einer bevorzugten Weiterbildung das zweite Computersystem eine erste Server-Einheit zur Darstellung des Streamingportals auf. Dieses ist als eine Link-Computereinheit eingerichtet oder weist eine solche Einheit auf, welche insbesondere zur Abwicklung von Streaming-Anfragen vorgesehen ist. Das Client-System ist vorzugsweise beim Informationsanbieter untergebracht, der neben einer automatisch ablaufenden Regie-Steuer-Software weitere Möglichkeiten der Einflußnahme hat. So ist ihm vorteilhaft auch ein Einpflegsystem als Teil des Client-Systems und eine Eingabe-Tool-Software zur Verfügung gestellt.

Gemäß einer besonders bevorzugten Weiterbildung ist zur Bewältigung einer großen Datenmasse zusätzlich ein zweiter Server als dynamischer Real-Video-Server zur Umsetzung von Multimedia-Daten für die erste Server-Einheit vorgesehen. Diese zweite Server-Einheit dient insbesondere der Verwaltung, Speicherung und Abwicklung der Streaming-Einheiten im Corporate Design oder auch der Footage-Daten. Sowohl das Capture-System als auch das Client-System - auch eine erste und zweite Server-Einheit innerhalb des Client-Systems - sind vorteilhafterweise über geeignet dimensionierte Datenkanäle miteinander verbunden. Dies könnten beispielsweise auch separate Datenkanäle für TV/Audio, WEB-TV oder Live-Daten sein.

Die oben genannten Weiterbildungen des zweiten Computersystems haben den Vorteil, daß ein User eine Anfrage an die Link-Computereinheit richten kann und vom dynamischen Real-Video-Server bedient wird.

Betreffend die Vorrichtung wird die Aufgabe durch die Erfindung auch mittels einem dritten Computersystem zum Bereitstellen eines Streamingportals gelöst, mit wenigstens einem Darstellungsrahmen zur Wiedergabe von Multimedia-Informationen eines Programms eines Informationsanbieters, dem die Multimedia-Informationen in Form von Multimedia-Daten zur Verfügung gestellt sind, wobei die Multimedia-Daten zur Wiedergabe in Form einer Anzahl von Daten-Streams vorgesehen sind, und
bei dem erfindungsgemäß
- die Multimedia-Daten anhand von nach dem Programm ermittelten Strukturdaten in eine Anzahl von Stream-Einheiten unterteilt sind, wobei eine Stream-Einheit mit einer eine Art der in der Stream-Einheit enthaltenen Multimedia-Daten kennzeichnenden Markierung versehen ist, und wobei die Stream-Einheit mit einem den Informationsanbieter kennzeichnenden Darstellungsrahmen versehen ist, und
- das dritte Computersystem als User-System ausgebildet ist, auf dem
- die Multimedia-Daten auf dem Streamingportal in einem für alle Daten des Streamingportals gemeinsam gestalteten und den Informationsanbieter kennzeichnenden Darstellungsrahmen wiedergebbar sind.

Betreffend die Verwendung wird die Aufgabe durch die Erfindung auch mittels der Verwendung eines dritten Computersystems zum Bereitstellen eines Streamingportals mit wenigstens einem Darstellungsrahmen zur Wiedergabe von Multimedia-Informationen eines Programms eines Informationsanbieters, wobei
- die Multimedia-Informationen für das Streamingportal in Form von Multimedia-Daten zur Verfügung gestellt werden und
- die Multimedia-Daten zur Wiedergabe in Form einer Anzahl von Daten-Streams vorgesehen sind,
gelöst. Dabei wird erfindungsgemäß das dritte Computersystem als User-System verwendet. Die Multimedia-Daten sind anhand von nach dem Programm ermittelten Strukturdaten in eine Anzahl von Stream-Einheiten unterteilt, wobei eine Stream-Einheit mit einer eine Art der in der Stream-Einheit enthaltenen Multimedia-Daten kennzeichnenden Markierung versehen ist und die Stream-Einheit zur Wiedergabe in Form eines Daten-Streams mit einem den Informationsanbieter kennzeichnenden Darstellungsrahmen versehen ist. Auf dem User-System werden die Multimedia-Daten auf dem Streamingportal in einem für die Daten gemeinsam und für den Informationsanbieter charakteristisch gestalteten Darstellungsrahmen wiedergegeben.

Das User-System könnte auch ein Home-Recorder sein. Dem User-System stehen die Strukturdaten zur Verfügung, so daß ein Anwender über eine vorteilhaft gewählte Benutzerführung in der Lage ist, ein Darstellungsangebot nach seiner Wahl zusammenzustellen. Dabei stehen ihm nicht nur Sendezeit und Kanal als Kriterium zur Verfügung. Er kann auch andere Strukturdaten, wie thematische Gesichtspunkte, Sendungskategorie (Spielfilm, Nachrichten etc.), Darsteller, Aktualität, lokale Kriterien und Ähnliches nutzen, um ein Darstellungsangebot seiner Wahl zusammenzustellen.

Gemäß einer Weiterbildung ist insbesondere eine Verwendung eines Multimedia-PC's mit einer On-Screen-Benutzerführung vorgesehen. Dieser könnte entweder als mobile Station, beispielsweise als Handy ausgebildet sein. Des weiteren könnte dies auch ein Home-PC sein. Dies könnte auch eine stationär, beispielsweise an öffentlichen Plätzen oder an Internet-Cafe's aufgestellte, fest eingerichtete Basisstation sein, die speziell zur Darstellung des Streamingportals des Informationsanbieters vorgesehen ist.

Während sich die Erfindung als besonders nützlich für die Anwendung betreffend Informationsanbieter im Rundfunk- und Fernsehbereich erweist und in diesem Sinne das Programm eines Informationsanbieters insbesondere als Information eines Rundfunk- und/oder Fernsehprogramm einer Rundfunk- und/oder Fernsehanstalt zu verstehen ist und während die Erfindung im folgenden im Detail auch anhand von Beispielen aus dem Rundfunk- und Femsehbereich beschrieben werden wird, so sollte dennoch klar sein, daß das hier beschriebene Konzept - umfassend das Streamingportal, die Computervorrichtung, das Verfahren zum Bereitstellen des Streamingportals, das Computerprogrammprodukt sowie das Computemetzwerk und ein erstes, zweites und drittes Computersystem und die Verwendung derselben, wie beansprucht, ebenfalls nützlich im Rahmen von anderen Anwendungen ist, welche außerhalb des Rundfunk- und Femsehbereichs liegen und Informationsanbieter betreffen, welche keine Rundfunk- und/oder Femsehanstalten oder ähnliche Sendeanstalten sind. Beispielsweise könnte das vorgestellte Konzept ebenso Anwendung finden für kommerzielle Informationsanbieter, deren Hauptinformationen im Bereich der Multimedia-Informationen liegen. Besonders geeignet sind Anwendungen, die einem Massenpublikum zur Verfügung stehen sollen und/oder Event-Charakter haben. Ein Beispiel dafür wäre ein Unternehmen, welches Kinos betreibt oder auch eine Filmproduktionsgesellschaft. Mit zunehmender Computer-Performance und Netzwerktechnologie ist praktisch auch jedes Unternehmen oder jede Privatperson in der Lage, unter Nutzung des vorgestellten Konzepts Werbung oder eine Selbstdarstellung in einem Netzwerk anzubieten. Vorteilhaft könnte das Konzept zum Beispiel auch von Parteien, in der Touristikbranche, von Reiseanbietern, von Konzertanbietern, in der Unterhaltungsbranche oder als Bordfernsehen im Zug, Flugzeug und Auto genutzt werden. Auch hier bietet das vorgestellte Konzept die erläuterten Vorteile für den Informationsanbieter. Dieser wird nämlich in die Lage versetzt, seine Multimedia-Informationen besonders effektiv und mit Wiedererkennungswert auf einem beliebigen Netzwerk, das nur breitbandig genug sein muß, darzustellen. In solch einem Fall wäre unter Programm eben die vom Informationsanbieter aufgestellte Liste von verfügbaren Multimedia-Informationen zu verstehen. Bei einem Kinobetreiber wäre das beispielsweise das aktuelle Kinoprogramm. Bei einer Filmproduktionsgesellschaft könnte dies beispielsweise das aktuelle Programm zur Produktion von Filmen sein. Bei sonstigen Firmen könnte dies das Programm der Werbefilme sein, welche das Unternehmen beschreiben und/oder bewerben.

Ausführungsbeispiele der Erfindung werden nun nachfolgend anhand der Zeichnung im Vergleich zum Stand der Technik, welcher zum Teil ebenfalls dargestellt ist, beschrieben. Diese soll die Ausführungsbeispiele nicht maßgeblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen.

Dabei ist zu berücksichtigen, daß vielfältige Modifikationen und Änderungen betreffend Form und Details einer Ausführungsform vorgenommen werden können, ohne von der allgemeinen Idee der Erfindung abzuweichen. Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein. Die allgemeine Idee der Erfindung ist nicht beschränkt auf die exakte Form oder das Detail der im folgenden gezeigten beschriebenen Ausführungsform oder beschränkt auf einen Gegenstand, der eingeschränkt wäre im Vergleich zu dem in den Ansprüchen beanspruchten Gegenstand.
Ein Teil der Beschreibung dieser Patentanmeldung enthält Material, welches Gegenstand eines Urheberrechtsschutzes ist. Diese Patentanmeldung zeigt und/oder beschreibt Gegenstände, die Ausstattungen des Inhabers sind oder werden können. Der Inhaber des Urheberrechtsschutzes und der Ausstattung hat keine Bedenken gegen die Facsimile-Wiedergabe der Patentbeschreibung, so wie sie in den Akten oder Aufzeichnungen des Patent- und Markenamtes erscheint, aber behält sich darüber hinaus alle Urheberrechte und Ausstattungsschutzrechte jeglicher Art vor.

Zum weiteren Verständnis der Erfindung wird nun in bezug auf die Figuren der Zeichnung eine bevorzugte Ausführungsform der Erfindung am Beispiel eines Internetportals eines Rundfunk- und Fernseh-Informationsanbieters erläutert. Die Zeichnung zeigt in:
- Figur 1: ein Beispiel einer Eingangsseite eines Streamingportals zur Wiedergabe von Multimedia-Informationen eines Programms eines Rundfunk- und Fernseh-Informationsanbieters gemäß dem Stand der Technik;
- Figur 2: ein Beispiel einer Eingangsseite bei einer besonders bevorzugten Ausführungsform eines Streamingportals eines Rundfunk- und Femseh-Anbieters mit einem den Informationsanbieter kennzeichnenden Darstellungsrahmen gemäß dem vorgeschlagenen Konzept;
- Figur 3: beispielhafte Kennzeichen für einen vorteilhaften Darstellungsrahmen in Form von Icons zur Kennzeichnung der Stream-Art bei der bevorzugten Ausführungsform;
- Figur 4: weitere beispielhafte Kennzeichen für einen vorteilhaften Darstellungsrahmen in Form von Logos zur Kennzeichnung der Art von in einer Stream-Einheit enthaltenen Multimedia-Daten, wobei auf eine bestimmte Sendereihe hingewiesen wird;
- Figur 5: ein stark vereinfachtes Schema zur Erläuterung des technischen Ablaufes betreffend: die Unterteilung von Stream-Einheiten nach einem zur Verfügung gestellten Programm und die Markierung einer Stream-Einheit mit einer für die Art der in der Stream-Einheit enthaltenen Multimedia-Daten kennzeichnenden Markierung zur Wiedergabe in Form eines Daten-Streams mit einem die Art und den Informationsanbieter kennzeichnenden Darstellungsrahmen auf einem Streamingportal gemäß der bevorzugten Ausführungsform;
- Figur 6: eine stark vereinfachte Darstellung des Ablaufs einer automatischen Unterteilung und Markierung und Anbringung eines kennzeichnenden Darstellungsrahmens bei Multimedia-Daten auf einem Streamingportal gemäß der bevorzugten Ausführungsform;
- Figur 7: eine "live & on-demand" Stream-Datei als Ergebnis des Ablaufs gemäß der bevorzugten Ausführungsform;
- Figur 8: eine besonders bevorzugte Ausführungsform eines Computemetzwerks, welche die Verwendung eines ersten Computersystems als Capture-System, eines zweiten Computer-Systems als Client-System mit einem zusätzlichen dynamischen Real-Video-Server und eines dritten Computer-Systems als User-System vorsieht;
- Figur 9: ein weiteres Beispiel einer Eingangsseite einer besonders bevorzugten Ausführungsform eines Streamingportals im Rahmen eines Navigationsbeispiels (Figuren 9 bis 12), wobei alle Daten zur Wiedergabe auf der besonders bevorzugten Ausführungsfbrm des Streamingportals in einem für die Daten gemeinsam und für den Informationsanbieter charakteristisch gestalteten Darstellungsrahmen wiedergegeben werden;
- Figur 10: eine für eine bestimmte Region vorgesehene Auswahlseite bei der besonders bevorzugten Ausführungsform des Streamingportals im Rahmen des Navigationsbeispiels (Figuren 9 bis 12);
- Figur 11: eine weitere Auswahlseite zur Wiedergabe von regional und zeitlich spezifizierten Multimedia-Informationen bei der besonders bevorzugten Ausführungsform des Streamingportals im Rahmen des Navigationsbeispiels (Figuren 9 bis 12);
- Figur 12: ein besonders vorteilhaftes Beispiel der Wiedergabe einer Stream-Einheit in Form eines Daten-Streams in einem die Art der in der Stream-Einheit enthaltenen Multimedia-Daten und den Informationsanbieter kennzeichnenden Darstellungsrahmen anhand des Navigationsbeispiels (Figuren 9 bis 12);
- Figur 13: weitere Beispiele zur Wiedergabe von Stream-Einheiten in Form eines Daten-Streams mit einem die Art und den Informationsanbieter kennzeichnenden Darstellungsrahmen gemäß der besonders bevorzugten Ausführungsform;
- Figur 14: ein Beispiel einer Verknüpfung der besonders bevorzugten Ausführungsform des Streamingportals mit dem üblichen Internet;
- Figur 15: ein Beispiel eines einer Sendung eines Programms zugeordneten Darstellungsrahmens mit Verknüpfungen, die Multimedia-Daten zur Verfügung stellen, welche die Sendung betreffen und über die Sendung hinausgehen, bei der besonders bevorzugten Ausführungsform eines Streamingportals;
- Figur 16: weitere Beispiele von Darstellungsrahmen wie in Figur 15;
- Figur 17: ein Beispiel einer Anzahl von Darstellungsrahmen, gruppiert und einer Sendung zugeordnet bei der besonders bevorzugten Ausführungsform eines Streamingportals, wobei die Gruppierung eine der Sendung entsprechende Gestaltungsweise aufweist;
- Figur 18: ein Beispiel eines mehrsprachig aufgebauten Darstellungsrahmens bei der besonders bevorzugten Ausführungsform.

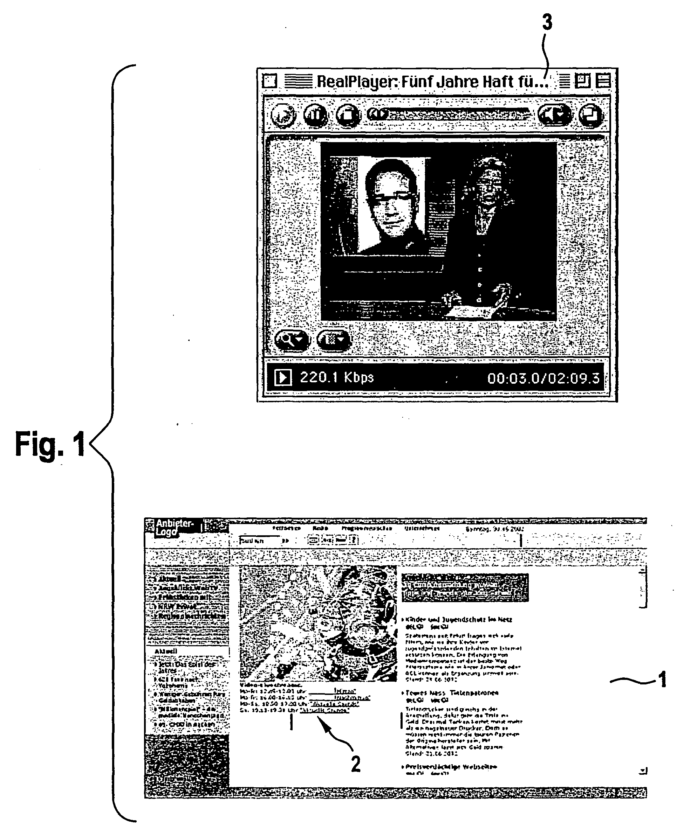

Figur 1 zeigt eine bekannte WEB-Seite 1 gemäß dem Stand der Technik, welche die Möglichkeit bietet, Multimedia-Informationen eines Programms eines Fernseh- und Rundfunksenders wiederzugeben. Dabei sind entsprechende Links 2 auf der WEB-Seite 1 vorgesehen, welche zum Abruf von audiovisuellen Medien führen, wenn die Links 2 mit einem Mauszeiger angeklickt werden.

Allerdings mangelt es dieser Seite noch an einer konsequenten Benutzerführung. Die Verknüpfungen/Links auf Multimedia-Streams sind verstreut auf der Seite angeordnet. Eine Übersicht über das "Streaming"-Angebot des Informationsanbieters über "Teaser" oder "Eye-Catcher" ist nicht vorgesehen. Außerdem weist beim Abruf einer Stream-Einheit zur Wiedergabe von Multimedia-Daten in Form eines Daten-Streams die Darstellung desselben kein Corporate-Design auf. D. h. beim Abruf von audiovisuellen Medien gemäß dem hier dargestellten Stand der Technik erscheint lediglich ein Real-Player-Fenster 3, welches keinerlei Bezug auf den Informationsanbieter hat. Es gibt auch keinen Wiedererkennungseffekt hinsichtlich einer Sendereihe oder einem Programmpunkt des Fernsehens oder des Hörfunks des Informationsanbieters bei der Wiedergabe des Daten-Streams im Real-Player-Fenster.

In Figur 2 ist beispielhaft eine Eingangsseite einer besonders bevorzugten Ausführungsform des vorgeschlagenen Streamingportals 4 gezeigt. Alle Daten auf dem Streamingportal 4 sind zur Wiedergabe in einem für die Daten gemeinsam gestalteten und den Informationsanbieter kennzeichnenden Darstellungsrahmen vorgesehen. Die farbliche Gestaltung des Darstellungsrahmens 4a und/oder des Logos 4b des Informationsanbieters wird durchgängig für das Streamingportal benutzt. Dies ist vor allem für die Multimedia-Daten der Fall. Es ermöglicht eine Streaming-Komplettlösung mittels der die Multimedia-Informationen des Rundfunk- und Femsehanbieters im Corporate-Design dargestellt werden können. Dies betrifft insbesondere die Streaming-Einheiten, welche durchweg als Daten-Stream im Corporate-Design dargestellt werden. Das Internet-Streaming-Portal ist so konzipiert, daß die Herstellung und Bereitstellung sowohl der Rohdaten, d. h. die direkt aus den Multimedia-Informationen gewonnenen Multimedia-Daten, als auch die charakteristische Kennzeichnung derselben mit Corporate-Design-Bausteinen, d. h. Icons, Logos und Darstellungsrahmen, grundsätzlich automatisch erfolgen kann und zeitnah und effektiv mit einem entsprechenden Tool zum Einpflegen von audiovisuellen Inhalten angepaßt werden.

Das Streaming-Portal weist eine Gruppierung 5 der Streaming-Inhalte in WEB-TV-, Livestream-, WEB-Audio- und Interaktiv-Angebote auf. Diese "Angebote" sind mit einem entsprechenden für die Stream-Art charakteristischen Icon 5 gekennzeichnet. Weiterhin weist die Seite einen Menüpunkt "Streaming-Kanäle" auf, welcher es ermöglicht, ein interaktiv vom Nutzer festgelegtes Fernsehprogramm 6 vom Internet zu beziehen und auf einer dem Benutzer zur Verfügung stehenden Konsole anzuschauen. Weiterhin bietet die Eingangsseite 4 die Möglichkeit, aktuelle Meldungen 7 entweder in der Form üblicher Datendarbietung oder aber als Multimedia-Daten in Form eines Daten-Streams in einem die Art der in der Stream-Einheit enthaltenen Multimedia-Daten und den Informationsanbieter kennzeichnenden Darstellungsrahmen anzuschauen. Die Eingangsseite 4 wird mit einem Wiedergabetool 8 präsentiert.

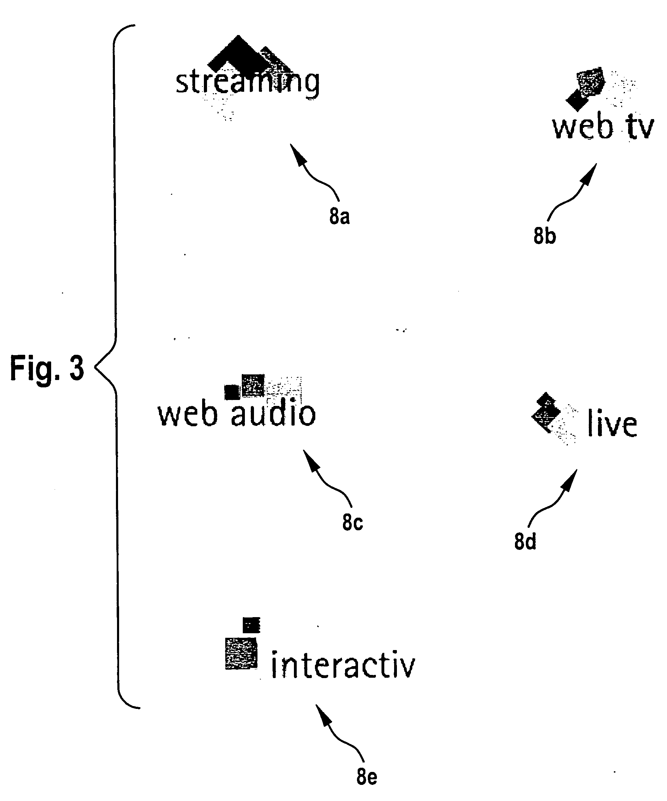

In Figur 3 sind eine Reihe von Icons 8a, 8b, 8c, 8d und 8e dargestellt, welche eine einheitliche Benutzerführung ermöglichen. Durch die eindeutige und leicht erkennbare Symbolik zur Kennzeichnung der Stream-Art für den Bereich "Streaming" ist es dem Benutzer möglich, sofort zu erkennen, in welchem Portalbereich des Streaming-Bereichs er sich gerade befindet. Das Streaming-Symbol 8a "Streaming" dient allgemein zur Kennzeichnung von Streaming-Material zur Darstellung von Multimedia-Daten. Dies können des weiteren entweder aus Fernsehsendungen gewonnene Multimedia-Daten sein, die durch ein Icon "web tv" 8b gekennzeichnet werden. Dies können aber auch Inhalte aus Hörfunksendungen sein, die durch ein Icon "web audio" 8c gekennzeichnet werden. Des weiteren bietet das Streaming-Portal die Möglichkeit, aktuelle Livesendungen entweder direkt aus dem üblichen Rundfunk- und Fernsehprogramm verfügbar zu machen oder, eigens für das Streamingportal vorgesehen, in einem Studio zu produzieren. Solche Bereiche werden mit dem Icon "live" 8d gekennzeichnet. Interaktiv-Bereiche würden mit dem Symbol "interactiv" gekennzeichnet, was den Benutzer auch auf Chat-Möglichkeiten und andere Möglichkeiten der interaktiven Nutzung des Streamingportals hinweist.

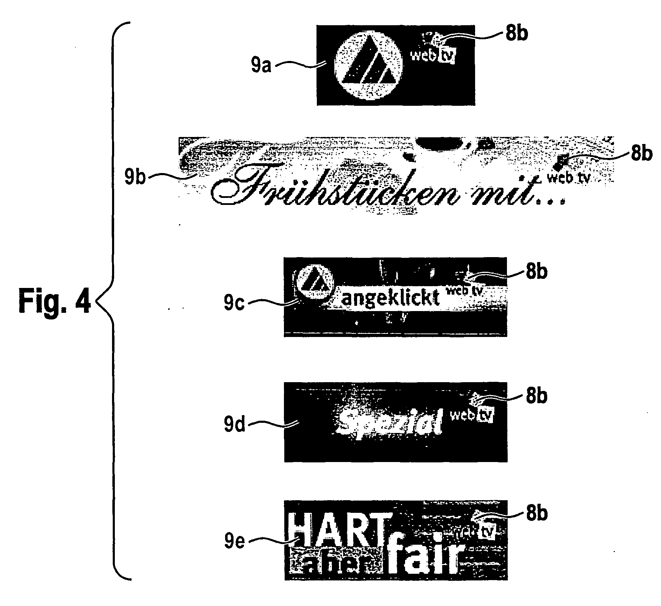

Alle Sendungen, welche auf dem Streamingportal dargestellt werden, verfügen über eigenständige "Logos". Diesen wird für die WEB-Fassung ein "Icon" der in Figur 3 beschriebenen Art hinzugefügt. Mit diesem Format einer charakteristischen Kennzeichnung erscheinen dann die Multimedia-Daten der entsprechenden Sendung abrufbar auf dem Streamingportal 4 in einem kennzeichnenden Darstellungsrahmen, der damit auf die Art der in der zugehörigen Streaming-Einheit enthaltenen Multimedia-Daten, die Stream-Art und den Informationsanbieter hinweist. Eine Reihe von eigenständigen Logos 9a, 9b, 9c, 9d, 9e wird beispielhaft in Figur 4 dargestellt. Jedes der Logos 9a bis 9e weist bei dem hier gewählten Beispiel das Icon "web tv" 8b auf, da es sich um Beiträge aus dem Fernsehbereich des Informationsanbieters handelt. Die Zusammensetzung von Multimedia-Rohdaten und den entsprechenden Corporate-Design-Bausteinen, d. h. die dargestellten Icons und Logos und die weitere, darüber hinaus gehende gemeinsame und für den Informationsanbieter charakteristische Gestaltung des Darstellungsrahmens erfordert einen technischen Ablauf, der im folgenden stark vereinfacht anhand der Figur 5 dargestellt ist.

Der technische Ablauf sieht ein Capture-System 10 vor. Diesem Capture-System 10 werden zunächst die Rohdaten 11 der Multimedia-Daten zur Verfügung gestellt. Dies sind üblicherweise analog-digital gewandelte, in Form einer Reihe von Daten-Streams wiedergebbare Daten, von denen die im wesentlichen jeder einer Einheit einer Multimedia-Information entspricht, d. h. beispielsweise eine gewisse Sendung oder ein Bericht in Form eines digitalen Daten-Streams. Die Multimedia-Rohdaten 11 können auf verschiedenste Weise zur Verfügung gestellt werden. Sie könnten bereits in digitaler Form vorliegen und auf einem entsprechenden Speichermedium übermittelt werden. Sie könnten auch über das Internet bezogen werden. Weiterhin besteht die Möglichkeit, diese per Antenne oder über eine Kabelleitung per Receiver zu empfangen. Die Rohdaten werden einer Strukturierungseinheit 12 des Capture-Systems 10 zur Verfügung gestellt, welche eine Hardware-Komponente 13 und eine Software-Komponente 14 aufweist, die zusammenarbeiten. Die Software-Komponente 14 führt im folgenden eine Unterteilung und Markierung der Multimedia-Rohdaten durch. Die Hardware-Komponente kann eine PCI oder anderweitig geeignete Karte eines Rechners umfassen. Der Strukturierungseinheit 12 wird beim vorliegenden Beispiel eine Show-View-Datei 15 und gegebenenfalls weitere Meta-Daten enthaltende Dateien zur Verfügung gestellt, welche Strukturdaten der Multimedia-Rohdaten enthalten. Diese Strukturdaten in Form der Show-View-Datei oder weiterer Dateien sind auf dem Netz 15a, zum Beispiel dem Internet, verfiigbar. Die Show-View-Datei 15 enthält im wesentlichen Informationen aus dem Programm des Informationsanbieters. Dies sind mindestens Startzeit, Endezeit und der Kanal einer Sendung. Anhand der in der Show-View-Datei 15 enthaltenen Strukturdaten werden die Multimedia-Rohdaten in eine Anzahl von Stream-Einheiten 16 unterteilt und mit einer für die Art der in der jeweiligen Stream-Einheit enthaltenen Multimedia-Daten charakteristischen Markierung 17 versehen. Die Markierung 17 gibt an, welche Art von Inhalt in Form von Multimedia-Daten eine Stream-Einheit 16 hat. Dies umfaßt zum Beispiel mindestens die komplette Identifizierung einer Sendung über Typ, Name, Zeitinformation und Kanal. Die Markierung 17 ist beispielsweise in einem Header der Stream-Einheit 16 enthalten. Eine derart unterteilte und markierte Strukturierung der Multimedia-Rohdaten 11 wird von der Strukturierungseinheit 12 in Form eines geeigneten Datenpools 18 ausgegeben und zur weiteren Verarbeitung vom Capture-System 10 zur Verfügung gestellt.

Ein Vorteil dieser Ausführungsform liegt darin, daß weitere Meta-Daten in den weiteren Dateien zur Verfügung gestellt sind. So umfaßt die weitere Identifizierung der Sendung auch weitere Informationen betreffend Darsteller, Regie und Produktion.

Beispielsweise könnte eine Unterteilung der Multimedia-Rohdaten 11 nicht nur hinsichtlich ihres Zeitablaufes, sondern auch hinsichtlich anderer Kriterien erfolgen. Hierzu könnten Strukturinformationen mittels der genannten weiteren Meta-Daten betreffend einer vorbestimmten Themenauswahl, einer Auswahl von Darstellern, einer Auswahl von Produzenten und/oder Regisseuren in der Show-View-Datei 15 oder weiteren Dateien zur Verfügung gestellt werden. Weiterhin könnten lokale, sprachliche oder aktuelle Kriterien zur Strukturierung der Multimedia-Rohdaten 11 in der Strukturierungseinheit 12 Verwendung finden. Dazu müßte die Show-View-Datei 15 oder weitere Dateien mit weiteren Meta-Daten entsprechende Strukturdaten aufweisen. Der soeben beschriebene Ablauf wird mittels der Software 14 automatisch durchgeführt. Der Prozeß kann selbstverständlich beeinflußt werden, indem beispielsweise die Art der Strukturdaten 15 geändert wird.

Die weitere Verarbeitung 19 der strukturierten, d. h. unterteilten und markierten Multimedia-Daten, erfolgt in einer Regieeinheit 20. Diese wird ebenfalls automatisch, mittels einer Regiesteuersoftware, die weitere Verarbeitung der nun aufbereiteten Multimedia-Rohdaten 18 vornehmen. Insbesondere erfolgt hier anhand der Markierung 17 einer Stream-Einheit 16 der Multimedia-Daten 18 das Hinzufügen eines Corporate-Designs zur Stream-Einheit 16. Je nach Art und Inhalt der Markierung 17 könnte die Stream-Einheit zum Beispiel mit einem für ein bestimmtes Corporate-Design 21, 22, 23 charakteristischen Darstellungsrahmen versehen werden. Dazu sind vorbestimmte Corporate-Design-Bausteine vorgesehen. Der Darstellungsrahmen umfaßt beispielsweise jede Art eines Corporate-Design-Bausteins 21, also jede Art der Gestaltung des Darstellungsrahmens in einer für den Informationsanbieter und die Art der Multimedia-Daten charakteristischen Gestaltungsweise. Insbesondere gehört dazu die Kennzeichnung des Informationsanbieters. Des weiteren könnte der Stream-Einheit 16 entsprechend der Markierung 17 eine die Art der in der jeweiligen Stream-Einheit enthaltenen Multimedia-Daten charakteristische Kennzeichnung in Form eines Icons 22 oder eines Logos 23 für eine bestimmte Sendung hinzugefügt werden. Das Zusammenfügen des Darstellungsrahmens 21, 22, 23 und der Stream-Einheit 16 aufgrund ihrer Kennzeichnung 17 erfolgt mittels der Regie- und Steuereinheit 20. Im Rahmen der Verarbeitung 19 über die Regie- und Steuereinheit 20 wird nunmehr der für das Streamingportal fertige Streaming-Beitrag auf einem geeigneten Datenträgersystem abrufbereit zur Verfügung gestellt, so daß der Beitrag der Streaming-Einheit in einem Corporate-Design über das Streamingportal 24 abrufbar ist.

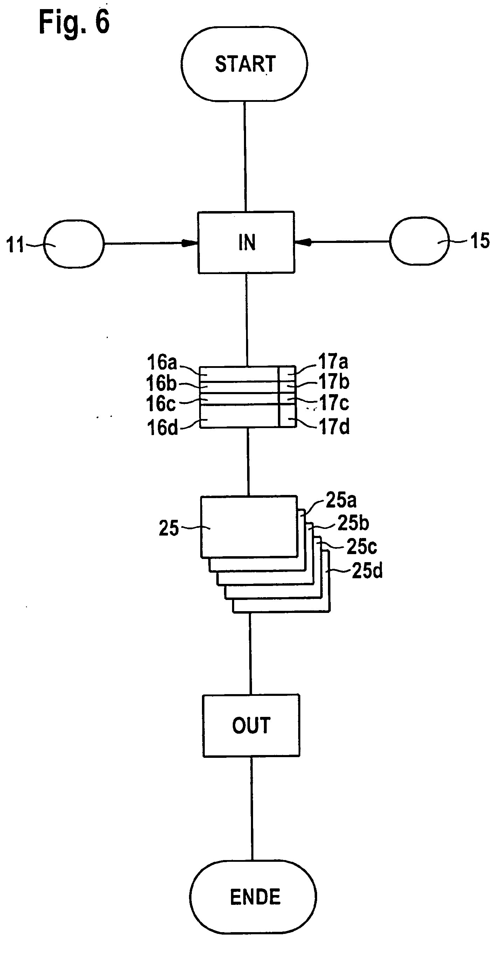

In Figur 6 ist der oben dargestellte Ablauf der Figur 5 nochmals in Form eines Ablaufdiagramms dargestellt. Der automatische Ablauf sieht bei einem "In"-System das Zusammenfügen von Multimedia-Rohdaten 11 und Show-View-Daten 15 vor, was mittels eines Capture-Systems erfolgen kann. Die Multimedia-Daten werden, unterteilt und markiert, d. h. strukturiert, und in Form einer entsprechenden Datei 18 als eine Anzahl von Stream-Einheiten 16a, 16b, 16c, 16d mit entsprechender Markierung 17a, 17b, 17c, 17d für die Art der in der jeweiligen Stream-Einheit enthaltenen Multimedia-Daten ausgegeben. In einem weiteren Schritt wird jede der Anzahl von Stream-Einheiten 16a, 16b, 16c, 16d entsprechend der Markierung 17a, 17b, 17c, 17d mit einem zur Verfügung gestellten Corporate-Design und dazu vorgesehenen Darstellungsrahmen 25 versehen, welcher in seiner Gestaltung selbst sowie in weiteren Applikationen, wie Icons 8a bis 8e oder Logos 9a bis 9e, für eine Stream-Einheit 16a, 16b, 16c, 16d jeweils kennzeichnend und/oder charakteristisch ist. Anhand des Darstellungsrahmens 25a kann später ein Nutzer beispielsweise den Inhalt der Stream-Einheit 16a auf besonders leichte Weise von einer weiteren Stream-Einheit 16b unterschieden, da die Stream-Einheit 16b mit einem anders gestalteten Rahmen 25b versehen ist. Dies kann mit einer beliebigen Vielzahl von Stream-Einheiten 16a, 16b, 16c, 16d und Darstellungsrahmen 25a, 25b, 25c, 25d automatisch im Rahmen der Regie- und Steuereinheit 20 vorgenommen werden. Selbstverständlich besteht damit auch die Möglichkeit, mit Hilfe eines Einpflegsystems zeitnah Einfluß zu nehmen, sowohl auf die Gestaltung des Rahmens 25, als auch auf die Multimedia-Daten 18 selbst. So können beispielsweise insbesondere weitere Daten zur Wiedergabe auf dem Streamingportal den Multimedia-Daten hinzugefügt werden, Multimedia-Daten könnten gelöscht werden oder weiter gruppiert werden, wenn dieses im einzelnen in Abweichung von der automatischen Regie- und Steuereinheit erwünscht ist. Die Ausgabe auf einem "Out"-System erfolgt in der Regel auf einem Client-Server, auf den ein Nutzer zugreifen kann.

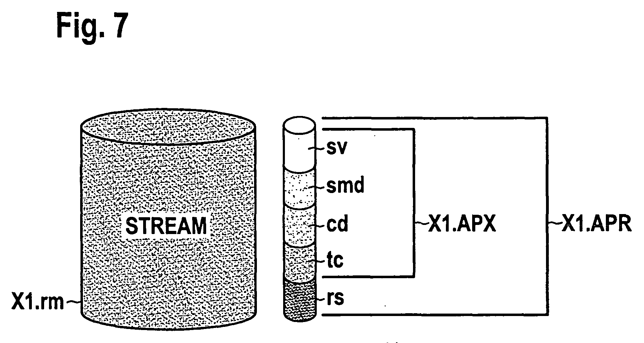

In Figur 7 ist das Ergebnis des erläuterten Ablaufs - eine "live & on-demand" Stream-Datei gezeigt, zur Wiedergabe einer Stream-Einheit mit einem die Art der in der Stream-Einheit enthaltenen Multimedia-Daten und den Informationsanbieter kennzeichnenden Darstellungsrahmen. Ein konkreter Verfahrensablauf eines Streaming Content Producers zur Erstellung der "live & on-demand" Stream-Datei ist im folgenden angegeben.

Ablaufplan eines SCP's (Streaming Content Producer) für eine "live & on-demand" Stream-Datei:

| | | |
|---|---|---|
| 1. Eingabe: Filmtitel | =X1 | |
| | | |
| 2. Eingabe: Show-View-Code (SV) mit VPS oder Einzeleingabe Start, Ende, Kanal. | = X1 .SV | - Show-View-Datei |
| | | |
| 3. Eingabe: Super-Meta-Daten (SMD) wie z. B. Regie, Produzent, Schauspieler usw. | = X1.smd | - Super-Meta-Daten-Datei |
| | | |
| 4. Eingabe bzw. Auswahl: Corporate Design (CD) | = X1.cd | - Corporate-Design-Datei |
| | | |
| 5. Aus der Systemzeit (Funkuhr) wird ein Echtzeit-Time-Code (TC) nach Start und Stop gemäß SV ermittelt und als Xl.tc abgespeichert | = X1.tc | - Time-Code-Datei |
| | | |
| 6. Alle Eingaben werden als X1.APX in Form eines TXT bzw. CSV Files auf ein Network Storage geschrieben. | = X1.APX | - Appendix-Datei |
| | | |
| 7. Der Streaming Content Producer startet und stoppt die Aufnahme gemäß Xl.sv und wird als X1.rm auf das Network Storage gespeichert bzw. als IP Datenstrom direkt auf einen dynamischen Server gesendet. | = X1.rm | - Real-Movie-Datei |
| | | |
| 8. Für einen navigierfähigen X1.rm wird die Appendix Datei X1.APX noch mit redaktionellen Daten (RS) angereichert z. B. Kapitel, Texte, Links, Grafiken usw. und als X1.APR auf ein Network Storage geschrieben | = X1.rs | - Appendix-Datei |
| | = X1.APR | - Appendix-Datei |
| | | |
| 9. Nun kann aus den vorliegenden Daten X1.APX und der Videodatei X1.rm automatisch eine X1.smil bzw. aus den Daten X1.APR und der Videodatei X1.rm automatisch eine X1R.smil Anwendung generiert werden. | = S1.smil | - Stream-Datei |

Unter Eingabe im obigen Sinne kann eine manuelle Eingabe zu verstehen sein. Günstigerweise ist unter Eingabe jedoch ein automatisches Einlesen aus einem vorhandenen Datenpool zu verstehen. Ein solcher Datenpool wird dabei vorzugsweise über ein Einpflegsystem in manueller oder automatischer Weise gefüllt und aktualisiert. Das Einlesen erfolgt mittels eines im Rahmen eines Computernetzwerks vorgesehenen Computer-Systems. Dies wird im einzelnen anhand der Figur 8 erläutert.

Vor dem Ablauf obiger Punkte wird die Struktur der zu verarbeitenden Multimedia-Informationen vorgegeben. Die Strukturdaten werden gemäß 1. bis 3. zur Verfügung gestellt. Dabei finden eine Time-Code- und eine Appendix-Datei gem. 5., 6. und 8. Anwendung. Die Unterteilung und Markierung der Multimedia-Daten anhand der Strukturdaten erfolgt u. a. gemäß 7. Dazu werden Appendix- und Real-Movie-Dateien nebeneinander abgelegt und/oder verweisen in geeigneter Weise aufeinander. Die Appendix-Datei oder Inhalte derselben könnten auch in einem Header der Real-Movie-Datei untergebracht sein. Unter Nutzung der Corporate-Design-Datei (4.) wird die Stream-Einheit mit einem die Art und den Informationsanbieter kennzeichnenden Darstellungsrahmen gemäß 9. zur Wiedergabe in Form eines Daten-Streams versehen.

Das Zusammenfügen von Multimedia-Daten und CD-Bausteinen erfolgt durch Generatoren, welche durch Skripte gesteuert sind. Dabei wird eine Xl.smil bzw. XlR.smil Anwendung mit folgenden Bauteilen generiert:
a) Ordner mit der Bezeichnung Xl,
b) in diesem Ordner, Unterordner für Audio, Video, Klammergrafiken, Grafiken, Texten, Weblinks und den Xl.smil bzw. XlR.smil Dateien.

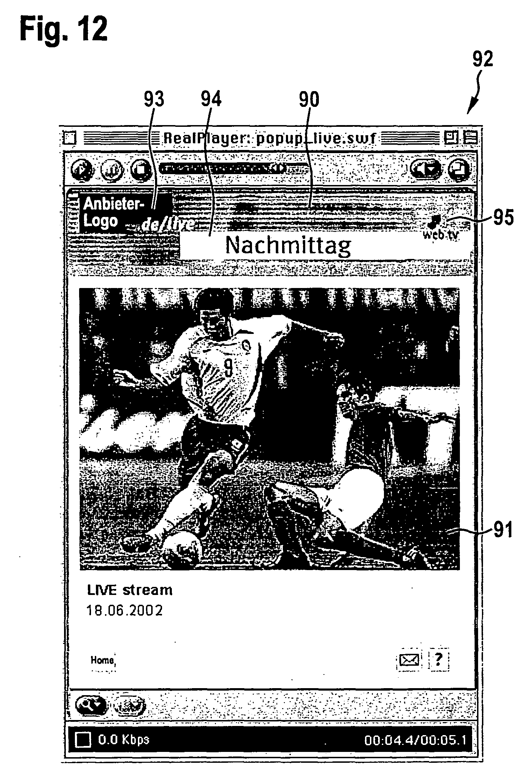

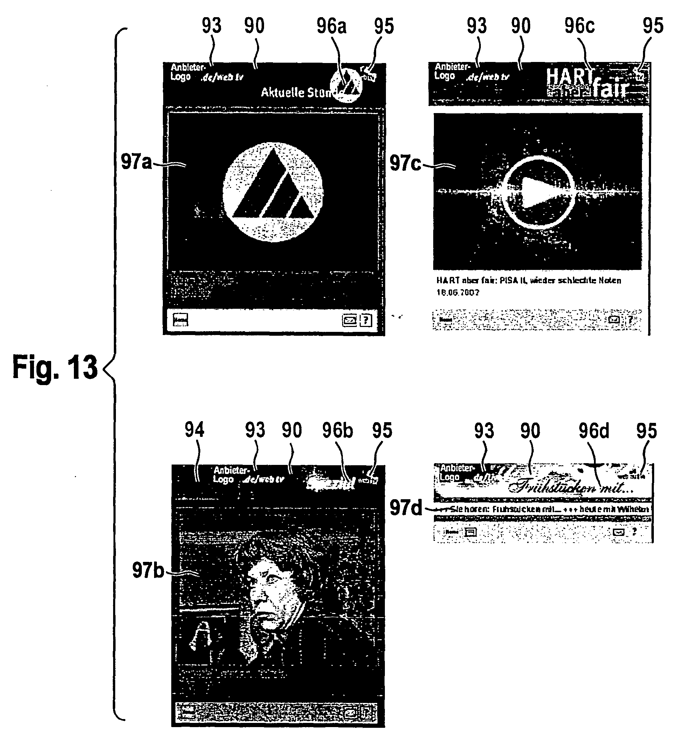

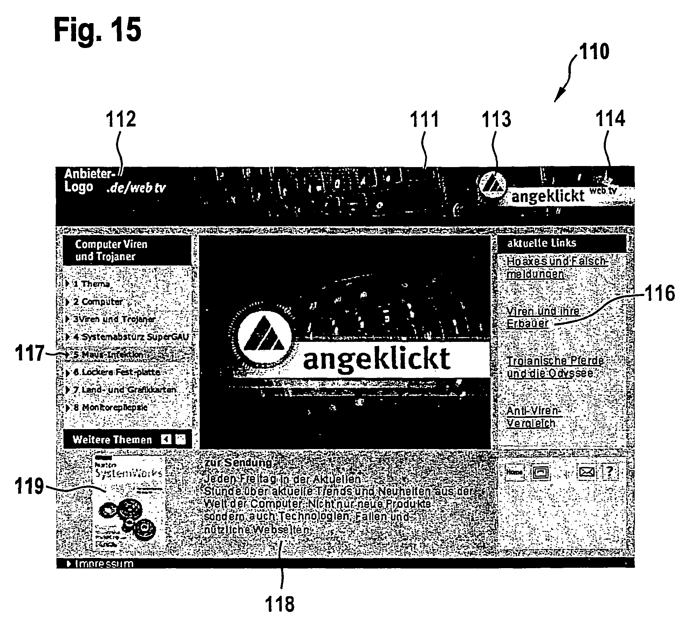

Eine X1.smil Datei liefert dabei eine "live"-Datei, die zur Darstellung dieser Stream-Einheit im Corporate-Design geeignet ist. Solche Dateien sind beispielsweise in ihrer Darstellung Figur 12 und Figur 13 gezeigt. Eine X1R.smil Datei weist eine weitere redaktionelle Bearbeitung auf, die z. B. zusätzliche Texte und Links aufweist. Solche Dateien sind beispielsweise in ihrer Darstellung in Figuren 15 bis 18 gezeigt. Insbesondere eine XlR.smil Datei könnte für die Darstellung einen Darstellungsrahmen zur Verfügung stellen, der es ermöglicht, zu einem ganz bestimmten Zeitpunkt, an einer ganz bestimmten Stelle, eine spezifische Information oder Kennzeichnung für eine vorbestimmte Zeit, in einer geeigneten Art und Weise wiederzugeben.

Das obige Beispiel nutzt das Real-Format für Streaming-Dateien. Andere Formate für Streaming-Einheiten lassen sich je nach Bedarf auch verwenden.

Im Ergebnis liegt ein Video live Stream mit Corporate Design und ausführlichen Meta-Daten, d. h. ein "live & on-demand"-Stream, navigierfähig und mit Zusatzinfos/Links vor.

Eine oben genannte Appendix-Datei wird vorzugsweise auch einem noch zu erläuternden User-System, zum Beispiel einem Home-Recorder, zur Verfügung gestellt. Damit stehen einem Anwender auch alle Show-View- und Meta-Daten zum Zusammenstellen eines persönlichen Darstellungsangebots zur Verfügung. Eine APX-Datei geht in ihrem Inhalt und Umfang erheblich über übliche Show-View-Codes (Sendezeit und Kanal) hinaus. Der Speicherumfang einer APX-Datei ist praktisch unbegrenzt und kann somit ausführliche Informationen und Strukturdaten zu einem Daten-Stream enthalten.

In Figur 8 ist schematisch eine besonders bevorzugte Ausführungsform eines Computernetzwerks dargestellt, welches sich vorteilhaft dazu eignet, den anhand der Figuren 5 bis 7 beschriebenen Verfahrensablauf eines Streaming Content Producers zur Bereitstellung eines Streamingportals gemäß den beispielhaften Figuren 2 bis 4 zur Verfügung zu stellen. Als Streaming Content Producer wird das Computernetzwerk mit Peripherie und Software bezeichnet. Die bevorzugte Ausführungsform des Computemetzwerks 30 weist ein erstes Computersystem in Form eines Capture-Systems 31, ein zweites Computersystem in Form eines Client-Systems 32 sowie ein drittes Computersystem in Form eines User-Systems 33 auf. Das Client-System umfaßt dabei eine erste Server-Einheit 34, welche als Kunden-Server dient. Auf diesen Kunden-Server 34 kann der Kunde von seinem User-System 33 aus über einen Footage-Link-Server 51 zugreifen. Zur schnellen Umsetzung und um eine schnelle Verfügbarkeit der Multimedia-Daten auf dem Streamingportal zu gewährleisten, werden vorzugsweise alle Multimedia-Daten zur Darstellung auf dem Streamingportal auf einem dynamischen Real-Video-Server 35 abgelegt. Dieser hat die nötige Kapazität und Performance, um alle Multimedia-Daten des Streamingportals ausreichend effizient zur Verfügung zu stellen. Im folgenden wird beispielhaft eine besonders bevorzugte Verwendung eines ersten Computersystems als Capture-System 31 sowie eines zweiten Computersystems als Client-System 32 mit einem Kunden-Server 34 und einem dynamischen Real-Video-Server 35 sowie eines dritten Computersystems als User-System 33 im Rahmen des Computemetzwerks 30 im Detail beschrieben.

Dem Capture-System 31 werden über eine Sendezentrale 36, in diesem Fall über Satellit 37, die Multimedia-Informationen über eine entsprechende Empfangseinheit 31 a zur Verfügung gestellt. Diese wird mit einer speziell dafür vorgesehenen Capture-Software betrieben. Die Empfangseinheit 31a ist in der Lage, ein VPS- oder Show-View-Format derart auszulesen, daß daraus der Struktur der Multimedia-Daten nach dem Programm des Informationsanbieters ermittelt und in Form von Strukturdaten, hier in Form einer Show-View-Datei, zur Verfügung gestellt ist. Die Multimedia-Informationen für das Streamingportal werden zuvor von einer Wandlereinheit digital-analog gewandelt und in Form einer Anzahl von Daten-Streams zur Verfügung gestellt. Das Capture-System 31 weist weiter ein Real-Video-Footage-Raid 31b sowie eine SMIL-Erstellungseinheit 31 auf. Mittels der Hardware 31b, 31 und der SMIL-Software werden die Multimedia-Daten anhand der Strukturdaten in eine Anzahl von Stream-Einheiten unterteilt und jede der Anzahl von Stream-Einheiten mit einer für die Art der in der jeweiligen Stream-Einheit enthaltenen Multimedia-Daten kennzeichnenden Markierung versehen. Das Capture-System wird über eine Administratoreinheit 31 d gesteuert. Über die Administratoreinheit 31d wird ein anhand Figur 5 erläuterter Datenpool 18 von strukturierten, unterteilten und markierten Stream-Einheiten dem Client-System 34 zur Verfügung gestellt.

Dafür sind entsprechende Datenleitungen 38 und 39 vorgesehen. Eine weitere Datenleitung 40 verbindet das Real-Video-Footage-Raid 31b direkt mit dem dynamischen Real-Video-Server 35 zur Übermittlung von Live-Daten. Die erste Datenleitung 38 übermittelt den Inhalt des Datenpools 18 an den Kunden-Server 34. Dabei sind die Daten aufgeteilt in drei separate Datenflüsse web.tv, web.audio/interaktiv und interaktiv. Die zweite Datenleitung 39 stellt zur Kennzeichnung des Inhalts des Datenpools 18 Corporate-Design-Bausteine der Regie- und Steuereinheit 32a des Client-Systems zur Verfügung. Des weiteren stellt sie für die Administration wichtige Informationen und Steueranweisungen zur Verfügung. Mittels einer Regie- und Steuersoftware der Einheit 32a werden die Corporate-Design-Bausteine 41 den Stream-Einheiten 16 entsprechend ihrer Kennzeichnung 17 aus dem Datenpool 18 (Figur 5) hinzugefügt. Die Steuerung erfolgt über einen Administrationskanal 39. An dieser Stelle kann bereits eine Aufteilung des Datenflusses gemäß der Art der Stream-Einheit in TV/Audio oder Interaktiv 42a, 42b erfolgt sein. Bei dem vorliegenden Ausführungsbeispiel erweist es sich als vorteilhaft, den TV/Audio- und Interaktiv-Anteil der Multimedia-Daten einer getrennten Datenleitung 43 sowie den TV-Anteil einer weiteren Datenleitung 44 zuzuführen. Auf dem dynamischen Real-Video-Server 35 werden die mit Corporate-Design-Bausteine versehenen TV/Audio- und Interaktiv-Stream-Einheiten über die Leitung 43 zur Verfügung gestellt. Die TV-Inhalte werden ebenfalls mit Corporate-Design-Bausteinen 41 versehen und über die Datenleitung 44 zur Verfügung gestellt. Des weiteren stehen dem dynamischen Real-Video-Server 35 sämtliche Footage-Daten, auch insbesondere Live-Daten, über die Datenleitung 40 zur Verfügung. Damit liegen die Anzahl von Stream-Einheiten in einem die Art der in der jeweiligen Stream-Einheit enthaltenen Multimedia-Daten und den Informationsanbieter kennzeichnenden Darstellungsrahmen zur Wiedergabe mittels eines Daten-Streams entweder auf dem dynamischen Real-Video-Server 35 oder auf dem Kunden-Server 34 zur Wiedergabe vor.

Die hier beschriebene, besonders bevorzugte Ausführungsform des Computemetzwerks sieht im Rahmen des Client-Systems des weiteren ein Einpflegsystem 45 vor. Mittels dem Einpflegsystem 45 kann aktuelles Multimedia-Rohdatenmaterial als Footage-Material 46 über eine separate Datenleitung 47 zur Verfügung gestellt werden. Des weiteren kann über eine Datenleitung 48 Einfluß auf die Regie- und Steuersoftware genommen werden. Vor allem dient das Kundeneinpflegsystem 45 auch zur Anpassung des Corporate-Designs, d. h. über das Einpflegsystem ist der Kunde im Rahmen des Client-Systems 32 in der Lage, sein Corporate-Design, so wie es über die Regie- und Steuereinheit 32 a verwendet wird, nach aktuellen Gegebenheiten zeitnah anzupassen. Der Kunde könnte dazu beispielsweise die anhand der Figur 5 erläuterten Corporate-Design-Bausteine ergänzen, abändern oder austauschen.

Gemäß einer Abwandlung könnte auch das Capture-System bereits eine zu den Einheiten 32a, 45 ähnliche Einheit aufweisen, welche Multimedia-Rohdaten und Corporate-Design-Bausteine datentechnisch zu einer fertigen auf dem Streamingportal als Daten-Stream wiedergebbaren Stream-Einheit zusammenführt. Das Client-System würde damit entlastet.

Ein Anwender kann nun im Rahmen seines User-Systems 33, beispielsweise mittels eines Multimedia-PC's 49 auf den Kunden-Server 34 zugreifen. Dafür steht ihm eine Intemetleitung 50 für eine Streaming-Anfrage auf das Streamingportal 51 zur Verfügung. Dieser ist bei dieser Ausführungsform ein Footage-Link-Server zugeschaltet. Je nach Art dieser Anfrage wird über das Streamingportal 51 und den Kunden-Server 34 ein entsprechender Datenfluß vom dynamischen Real-Video-Server 35 zum Kundenportal 49 ausgelöst. Dies kann ein Interaktiv-Datenfluß 42a sein. Des weiteren könnte auch ein WEB-TV-Datenfluß 42b ausgelöst werden. Gegebenenfalls könnten auch weitere Daten oder weitere Multimedia-Daten, welche nicht zur Wiedergabe in einem Corporate-Design vorgesehen sind, über eine Datenleitung 40 dem Multimedia-PC 49 zur Verfügung gestellt werden. In der Regel erfolgt aber jede Darstellung in einem Corporate Design.

Vorteilhaft sind die Datenleitungen 42a, 42b und 40 entsprechend der zu übermittelnden Daten angepaßt. Hier sind vielfältige Möglichkeiten der Datenübermittlung gegeben. So ist es in einer Abwandlung der hier beschriebenen bevorzugten Ausführungsform möglich, das User-System mobil zu gestalten. Anstelle eines Multimedia-PC's 49 könnte auch ein Mobiltelefon zur Anfrage auf das Streaming-Portal 51 und zum Empfang von Multimedia-Daten vom dynamischen Real-Video-Server 35 dienen. In einer weiteren Abwandlung könnte beispielsweise eine fest installierte Basisstation anstelle des Multimedia-PC's 49 dienen, welche feste Datenleitungen 40, 42b, und 42a zum dynamischen Real-Video-Server 35 aufweist. In diesem Fall könnte eine Datenleitung 40, 42b und 42a je nach Bedarf der zu übermittelnden Daten (TV/Audio/Interaktiv oder TV oder Footage) großzügig ausgelegt werden. Bei der hier dargestellten Ausführungsform handelt es sich um einen Multimedia-PC 49, der beispielsweise als Home-Computer bei einem Privatnutzer aufgestellt sein kann und dessen Anbindung an den dynamischen Real-Video-Server 35 über Internet-Leitungen 40, 42b, 42a erfolgt.

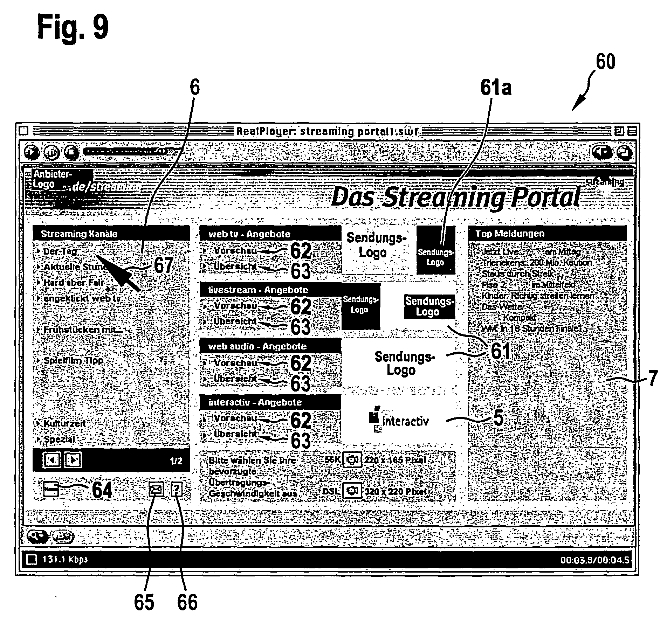

Im folgenden ist ein Navigationsbeispiel auf dem Streamingportal gemäß der bevorzugten Ausführungsform anhand der Figuren 9 bis 12 beschrieben, wie es sich bei einer Streaming-Anfrage an das Streaming-Portal 60 abspielen könnte. Im wesentlichen entspricht das in Figur 9 dargestellte Streaming-Portal 60 dem bereits in Figur 2 dargestellten Streaming-Portal 4. Es ist wie in Figur 2 eine Liste von Streaming-Kanälen 6 verfügbar sowie eine Reihe von aktuellen Meldungen 7 verfügbar. Daneben gibt es die verschiedenen Angebote für WEB-TV, Livestream, WEB-Audio und Interaktiv. Der Multimedia-Inhalt dieser Angebote ist in Form von Daten-Streams zur Wiedergabe gemäß einem Verfahren, zum Beispiel wie in den Figuren 5 bis 7 beschrieben, sowie im Rahmen eines Computemetzwerks, zum Beispiel wie in Figur 8 beschrieben, zur Verfügung gestellt.

In Übereinstimmung mit der in Figur 2 dargestellten Eingangsseite 4 des Streaming-Portals ist bei der in Figur 9 dargestellten Eingangsseite 60 des Streaming-Portals beim Interaktiv-Angebot ein entsprechendes Icon 5 (wie zum Beispiel eines von 8a bis 8e in Figur 3) als eindeutige Symbolik für den Bereich "Streaming" im Interaktiv-Portal sichtbar. Für die weiteren Angebote ist es möglich, mittels einer Durchlaufleiste 61, den detaillierten Inhalt direkt visuell in Form eines Logos 61 a (wie zum Beispiel eines von 9a bis 9e in Figur 4) beschrieben, sichtbar zu machen. Wenn der Nutzer gezielt die Angebote, zum Beispiel aus dem Bereich "WEB-TV", einsehen möchte, klickt er auf "Übersicht" 63 und alle Angebote aus diesem Bereich werden in der Leiste 61 mit Wiedererkennungswert zur Auswahl aufgeführt. Diese Auswahl mit Logo 61a erscheint dann anstatt der Icon-Symbolik 5.

Der Nutzer kann direkt seine Sendung 6 auswählen. Beispielsweise könnte er über die Auswahl "Streaming-Kanäle" das Angebot "Der Tag" auswählen. Hier könnte auch eine regionale Auswahl vorgenommen werden, zum Beispiel "Der Tag in NRW" oder "Der Tag in Bayern". Weitere Kanäle sind auf den weiteren "Streaming-Kanal"-Seiten anwählbar.

Der Nutzer kann auch direkt auf eine "Top-Meldung" 7 klicken und springt dann direkt an den Beitrag der entsprechenden Sendung.

Der Nutzer kann ebenso erst einmal herumstöbern und schaut sich über die "Vorschau" 62 die "Streaming-Angebote" an. Auch in der Vorschau kann durch Klick eine Sendung direkt erreicht werden.

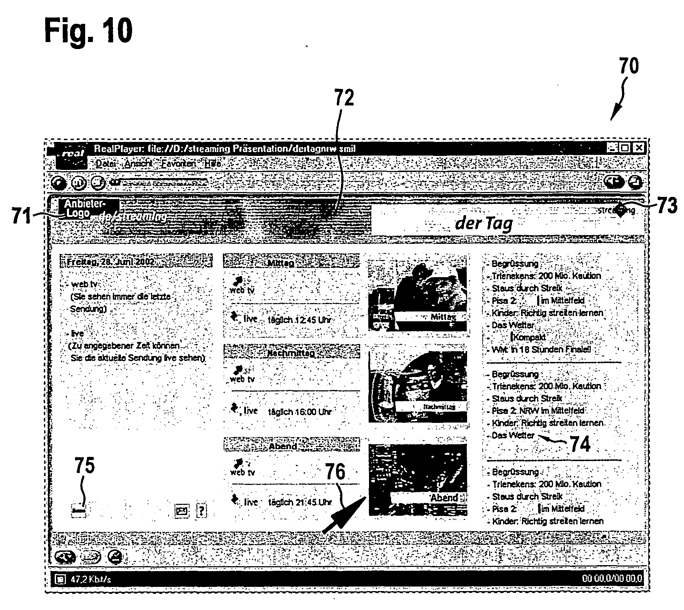

Die Eingabe der Übertragungsgeschwindigkeit wird im Unterschied zu bisher bekannten Formen einer Internetseite nur noch auf dieser Eingangsseite notwendig. Hier steht eine DSL- oder 56K-Einstellung zur Verfügung. Dem Nutzer steht somit ab diesem Zeitpunkt die komfortable Nutzung des gesamten Multimedia-Inhalts des Informations/Rundfunk/Fernseh-Senders zur Verfügung. Dies entspricht praktisch einem eigenen Fernsehsender, der im Vergleich zum üblichen Fernseh- oder Hörfunkprogramm jedoch durch weiteres Datenmaterial zusätzlich zu den Multimedia-Daten angereichert ist. Dies wird im Rahmen des Navigationsbeispiels und den folgenden Figuren 10 bis 12 im einzelnen erläutert werden.

Über "Home" 64 kehrt der Nutzer zurück zur Homepage des Rundfunk- und Fernsehanbieters zurück. Des weiteren ist eine "Mail" 65 und eine "Hilfestellung" 66 auf der Eingangsseite zur Verfügung gestellt. Die Hilfestellung betrifft beispielsweise die optimale Einstellung des Rechners, weitere Informationen zum Streaming-Portal, Trouble-Shooting und Ähnliches.

Im vorliegenden Navigationsbeispiel will der Nutzer den aktuellen Stand aus NRW erfahren und wählt in der Auswahl "Streaming-Kanäle" das Angebot "Der Tag in NRW". Dazu klickt er mit dem Mauszeiger 67 auf den entsprechenden Menüpunkt.

Danach wird dem Nutzer wie in Figur 10 dargestellt die weitere Seite 70 des Streamingportals mit der Überschrift "Der Tag in NRW" im Corporate-Design 71 des Informationsanbieters und in einem die Sendung kennzeichnenden Design 72 als auch mit einer durchgängigen Symbolik für Streaming 73 zur Verfügung gestellt. Diese Kombination beruht auf der technischen Zusammenführung von Multimedia-Rohdaten und Footage-Material sowie Corporate-Design-Bausteinen gemäß dem in den Figuren 5 bis 7 dargestellten Verfahren im Rahmen eines Capture- und Client-Systems, wie es in Figur 8 dargestellt ist.

Der Nutzer kann nun auf der rechten Seite des Darstellungsrahmens die "Schlagzeilen des Tages" mit einem Blick sehen. Ebenso kann der Nutzer direkt eine "Schlagzeile" auswählen. Bei der Auswahl 74 "Das Wetter" würde der Nutzer beispielsweise direkt an die entsprechende Stelle in einer Sendung springen. Über "Home" 75 kehrt der Nutzer zur Eingangsseite 60 (Figur 9) des Portals zurück. In dem hier vorliegenden Navigationsbeispiel klickt der Nutzer eine Sendung im Rahmen von "NRW am Mittag" direkt an. Dies ist durch den Mauszeiger 76 angedeutet.

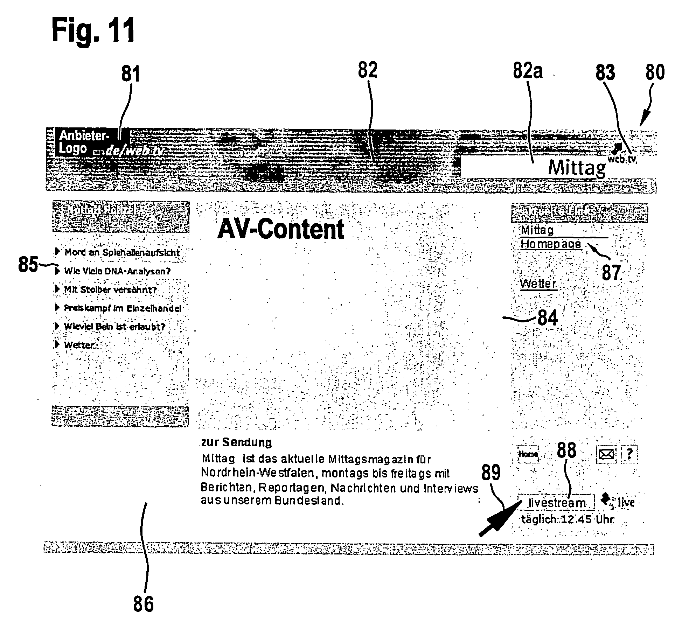

Die weitere Seite 80 des Streamingportals ist in Figur 11 dargestellt. Sie stellt die entsprechende Seite der Sendung "NRW am Mittag" dar. Auch diese Seite ist mit dem Corporate-Design des Informationsanbieters 81 versehen. Zudem handelt es sich um ein die Sendung kennzeichnendes Logo 82a und die gesamte Seite audiovisuell gestaltendes Layout 82 als auch um eine durchgängige Symbolik für WEB-TV 83. Eine solche Gestaltung wird üblicherweise mit dem in Figur 8 beschriebenen Regie- und Steuergerät 32a automatisch vorgenommen. Sie könnte aber auch mit dem in Figur 8 beschriebenen Einpflegsystem 45 jederzeit aktualisiert werden. Im übrigen könnte eine solche Darstellungsweise auch bereits von dem in Figur 8 dargestellten Capture-System 31 als Standard zur Verfügung gestellt werden.

Auf der Seite 80 können nun die Themen 85 der Sendung 84 direkt angesprungen werden. Begleitend (CC synchron) zum Film 84 können Grafiken (hier nicht dargestellt), Texte 86 und Links 87 als weitere Daten neben den Multimedia-Daten 84 dargeboten werden. Wenn die Sendung, zum Beispiel kurz nach 16.00 Uhr, angeklickt wurde, blinkt bei dem hier dargestellten Ausführungsbeispiel der "Livestream"-Button 88. Der Nutzer kann somit auch direkt die aktuelle Livesendung auf dem in Figur 8 dargestellten Nutzerportal 49 aufrufen.

Bei dem hier dargestellten Navigationsbeispiel hat der Nutzer mit seinem Mauszeiger 89 den "Livestream"-Button 88 gedrückt.

Figur 12 zeigt den vom Benutzer gewählten Livestream 91. Dieser wird dem Nutzer mittels eines Wiedergabe-Tools 92 zur Steuerung des Livestreams dargestellt. Im Unterschied zu bisher üblichen Darstellungsformen eines Livestreams, wie unter 3 in Figur 1 dargestellt, wird bei dem hier dargestellten Navigationsbeispiel (Figuren 9 bis 12) der Livestream in einer auf dem dynamischen Real-Video-Server 35 der Figur 8 abgelegten Form für den Kunden-Server 34 im Corporate-Design des Informationsanbieters 93 mit einer charakteristischen Kennzeichnung 94 für die Sendung und mit einer durchgängigen Symbolik 95 für die Stream-Art in einem charakteristisch kennzeichnenden Darstellungsrahmen 90 wiedergegeben.

Das dargestellte Navigationsbeispiel der Figuren 9 bis 12 macht deutlich, daß erst mittels des hier vorgestellten Konzepts für ein Computemetzwerk und ein Verfahren zur Bereitstellung des erläuterten Streamingportals eine Stream-Einheit in einem die Art der in der jeweiligen Stream-Einheit enthaltenen Multimedia-Daten und den Informationsanbieter charakteristisch kennzeichnenden Darstellungsrahmen mittels eines Daten-Streams wiedergegeben werden kann. Des weiteren zeigt dieses Navigationsbeispiel, daß die Daten auf dem Streamingportal gemäß der bevorzugten Ausführungsform in einem für die Daten gemeinsam gestalteten und für den Informationsanbieter charakteristisch kennzeichnenden Darstellungsrahmen wiedergegeben werden.

Die Wiedergabe von Informationsmaterial in einem Corporate-Design ist für den Informationsanbieter gerade bei audiovisuellen Medien von höchstem Interesse. Die Streaming-Angebote können besser "gefeatured" werden. Das Potential des wiederverwertbaren Sendematerials zum Streaming-Content kann wesentlich höher genutzt werden, insbesondere angereichert mit multimedialen Zusatzinformationen und Links. Des weiteren ist die Logistik und die technische Abwicklung gemäß dem vorgeschlagenen Konzept einfach und effizient strukturiert. Über das vorgeschlagene Konzept wird praktisch ein Internet-Fernsehen in einem für den Informationsanbieter charakteristischen Format automatisch aus vorhandenen Multimedia-Informationen umgesetzt.

Figur 13 zeigt weitere Beispiele von Darstellungsrahmen 90, wie einer in Figur 12 gezeigt wurde, jedoch mit anderem Inhalt und entsprechender Kennzeichnung. In allen Beispielen 90 befindet sich das Corporate-Design des Informationsanbieters 93, also ein entsprechendes Logo, Layout, Markensymbol oder eine bestimmte farbliche Gestaltung. Zum Teil wird auch auf weitere Informationsanbieter mit einem separaten Corporate-Design 94 hingewiesen. Das Logo einer entsprechenden Sendung 96a, 96b, 96c, 96d ist in jedem der Multimedia-Fenster 90 vorgesehen. Außerdem kennzeichnet die durchgängige Symbolik 95 die Art der Streaming-Einheiten als WEB-TV. Die Streaming-Einheiten stellen jeweils den Ablauf der mit den Symbolen 96a, 96b, 96c, 96d indizierten Sendung 97a, 97b, 97c, 97d als Daten-Stream dar. Eine Besonderheit stellt Daten-Stream 97d dar. Hier handelt es sich um die akustische Wiedergabe einer Hörfunksendung.

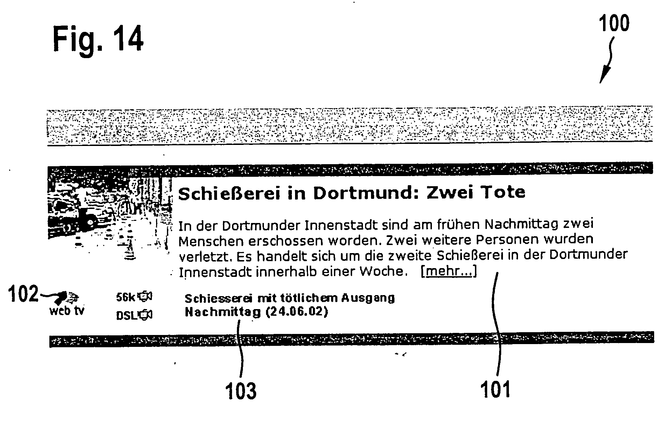

Figur 14 zeigt, daß die durchgängige Nutzung einheitlicher Symbolik für Streaming-Inhalte besonders vorteilhaft ist, da der Nutzer erkennen kann, welches Angebot zu erwarten ist. In einem besonderen Fall entspricht jedem der Icons der Figur 3 praktisch ein eigens dafür vorgesehener Datenfluß/Datenkanal. Eine Auswahl dessen ist beispielsweise als Datenkanal 42a, 42b und 40 in Figur 8 beschrieben. Eine normale HTML-Seite 100 der Figur 13 zeigt vorzugsweise neben einem Dateninhalt, wie er in einer Darstellungsform 101 für übliche WEB-Seiten bekannt ist, das genannte Icon 102 als durchgängige Symbolik und als Hinweis auf einen Fernsehbeitrag zusammen mit dem Titel 103 zur Ansicht auf einem Streamingportal, wie in den Figuren 2 bis 13 beschrieben. Eine Verknüpfung des Streamingportals mit dem üblichen Internet ist auf diese Weise vorteilhaft möglich. Klickt man auf das Icon 102 "WEB-TV", erhält der Nutzer Informationen über das aktuelle Thema mittels dem Streamingportal. Dabei werden vom Nutzer zuvor auf einer Eingangsseite 60 (Figur 9) vorgenommene Voreinstellungen betreffend Systemvoraussetzung, Real-Player, Downloads und anderen Einstellungen des Rechners, wie Trouble-Shooting, genutzt.

Figur 15 zeigt eine Darstellungsseite 110, die in einem eben beschriebenen charakteristisch gestalteten Darstellungsrahmen 111 mit entsprechenden Applikationen 112 für den Informationsanbieter, Applikationen 113 für die Sendung und Applikationen 114 als durchgängige Symbolik. Darüber hinaus ist nicht nur die entsprechende Sendung 115 selbst gezeigt, sondern auch weitere Links 116, die Themen der Sendung 117 sowie Zusatzinformationen 118, in diesem Fall ein ergänzendes Buch 119.

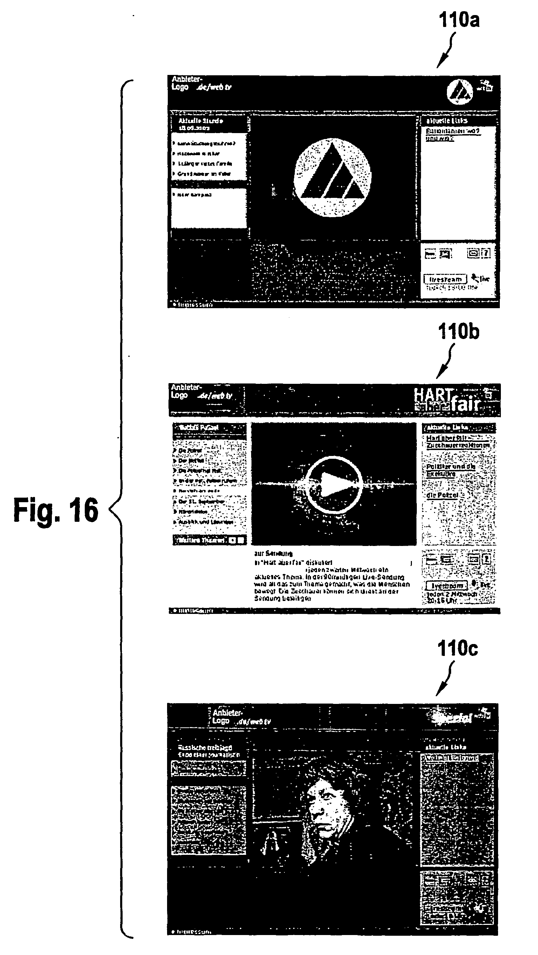

Weitere Beispiele dazu sind anhand der Bilder 110a, 110b, 110c in Figur 16 gezeigt.

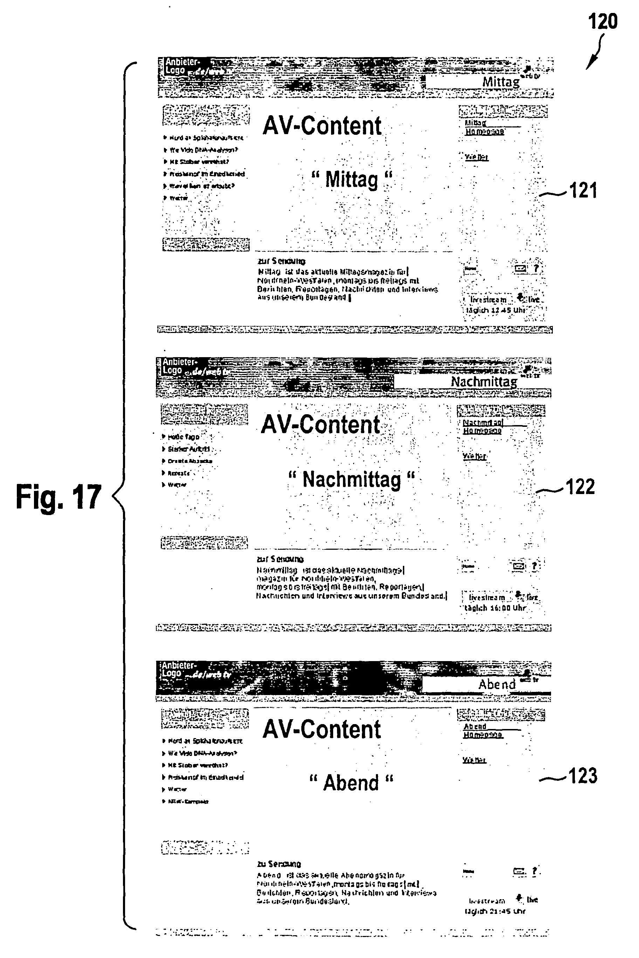

Weitere Darstellungsseiten des Streamingportals lassen sich beispielsweise anhand zeitlicher Kriterien gruppieren. Eine solche Gruppe von Seiten 120 ist beispielhaft in der Figur 17 anhand der Sendung "NRW" gezeigt. Die Gruppe 120 weist eine Anzahl von Darstellungsrahmen 121, 122, 123 auf, die gruppiert und einer lokal für NRW vorgesehenen Sendung zugeordnet sind. Die Gruppierung betrifft die zeitliche Abfolge von Sendungsbeiträgen "NRW am Mittag" 121, "NRW am Nachmittag" 122 und "NRW am Abend" 123. Für die Gruppierung 120 ist eine entsprechend charakteristische Gestaltungsweise entsprechend der Sendung für NRW vorgesehen. Eine weitere Form der Gruppierung könnte Darstellungen aus verschiedenen Städten der Region, so zum Beispiel "Aus Düsseldorf" umfassen. Eine wie in der Figur 17 dargestellte Gruppierung von Darstellungsseiten ist bereits entsprechend der Markierung 17 einer Stream-Einheit 16 innerhalb eines Daten-Pools 18, wie in Figur 5 dargestellt, seitens eines Capture-Systems 10 vorgesehen. Eine entsprechende Umsetzung erfolgt entweder im Capture-System 31 oder in einer Regie- und Steuereinheit 32a des Client-Systems 32 der Figur 8 selbst oder aber in einem Einpflegsystem 45 des Client-Systems 32 der Figur 8, wenn aktuelle Änderungen der Corporate-Design-Bausteine 41 der Figur 8 vorgesehen sind.

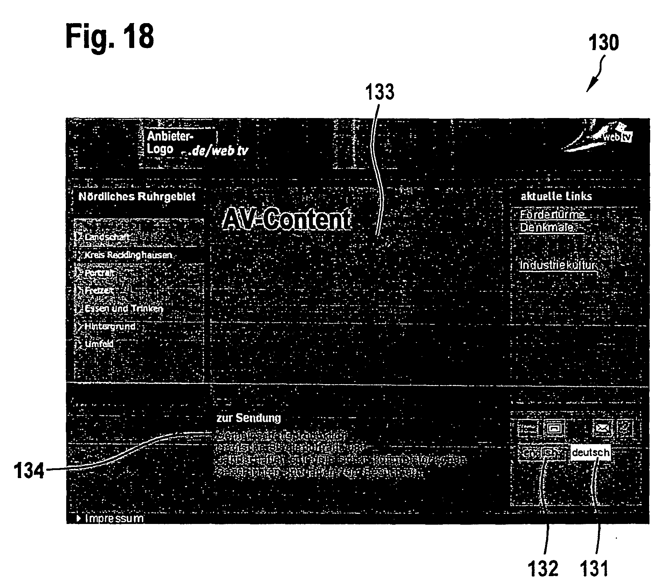

Figur 18 zeigt einen beispielhaften Darstellungsrahmen 130, welcher mehrsprachig, d. h. in diesem Fall in Deutsch 131 und/oder Englisch 132, aufgebaut sein kann. Beispielsweise ist es beim Ablauf der Sendung 133 möglich, daß im Textfenster 134 eine englische Übersetzung der Sendung läuft. Dies erweist sich insbesondere im Falle von Europamagazinen als vorteilhaft, die zum Beispiel je nach Region in Deutsch/Englisch, Deutsch/Französisch, Deutsch/Niederländisch oder Deutsch/Luxemburgisch darstellbar sind.

In der obigen detaillierten Beschreibung wird ein eigenständiger WEB-Sender, d. h. ein "Fernsehsender im Internet", beschrieben. Dieser stellt sich im wesentlichen als ein Streamingportal auf einem Nutzer-, Multimedia-PC, Handy oder auf einer Basisstation dar. Zur Bereitstellung des WEB-Senders ist ein entsprechendes Computemetzwerk der Figur 8, welches nach einem Verfahren der Figuren 5 bis 7 arbeitet, vorgesehen. Auf diese Weise können entweder schon vorhandene Rundfunk- und Femsehinhalte als Multimedia-Daten auf dem WEB-Sender etabliert werden, oder es können moderierte Sendung produziert werden, welche speziell für den WEB-Sender vorgesehen sind. Sendematerial auf dem WEB-Sender kann beliebig kommentiert oder mit Zusatzinformationen in üblichem oder Multimedia-Format angereichert werden. Zudem ist die Möglichkeit der Herstellung von Livesendungen speziell für den WEB-Sender über das Capture-System möglich, das dazu beispielsweise eine entsprechende Sendeeinheit aufweisen könnte. Das Streamingportal selbst ist im Baukastenprinzip aufgebaut und ermöglicht den Zugriff über eine Eingangsseite auf weitere Darstellungsrahmen, über welche Multimedia-Streaming-Einheiten abrufbar sind. Die Darstellungsrahmen lassen sich je nach Bedürfnis nach verschiedensten Kriterien gruppieren, welche bereits bei der Strukturierung der Daten anhand eines Programms eines Informationsanbieters vorgegeben und mittels einer Steuer- und Regieeinheit automatisch umgesetzt werden. Dazu dienen u. a. auch fertige Ablaufpläne, Texte, Links und weiteres Strukturmaterial, welches beispielsweise auch per Internet oder Email bereitgestellt werden kann. Einpflegesysteme ermöglichen eine Anpassung der Strukturdaten sowie eine Anpassung der Multimedia-Daten selbst auf dem Streamingportal. Das Problem Multimedia-Rohdaten mit einer entsprechenden Corporate-Design-Verpackung zu versehen, wird so auf eine sehr effektive und automatische Weise über ein Capture-System, ein Client-System und ein User-System mit einem für den Nutzer durchgängigen Navigationskonzept gelöst. Ein User-System kann dabei auch eine geeignete Form eines Home-Recorders umfassen. Auch sind Erweiterungen dessen mit den Möglichkeiten des Mobilfunks umfaßt. Dazu gehört insbesondere eine Mobiltelefon-User-Konsole oder eine Remote-Steuerung einer stationären User-Konsole oder eines Home-Recorders über das Mobiltelefon.

Die in der vorstehenden Beschreibung, in der Zeichnung sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Streamingportal mit wenigstens einem Darstellungsrahmen, zur Wiedergabe von Multimedia-Informationen eines Programminhalts eines Informationsanbieters, wobei die Multimedia-Informationen in Form von Multimedia-Daten zur Verfügung gestellt sind und die Multimedia-Daten zur Wiedergabe in Form einer Anzahl von Daten-Streams vorgesehen sind,
**dadurch gekennzeichnet, daß**
die Multimedia-Daten anhand von nach dem Programminhalt ermittelten Strukturdaten in eine Anzahl von Stream-Einheiten unterteilt sind, wobei eine Stream-Einheit mit einer die Art der in der Stream-Einheit enthaltenen Multimedia-Daten kennzeichnenden Markierung versehen ist und die Stream-Einheit zur Wiedergabe in Form eines Daten-Streams mit einem den Informationsanbieter kennzeichnenden Darstellungsrahmen versehen ist.

2. Streamingportal gemäß Anspruch 1, **gekennzeichnet durch**
eine Anzahl von auf dem Streamingportal jeweils mit einem den Informationsanbieter kennzeichnenden Darstellungsrahmen hinterlegten Datenstreams, die zur Wiedergabe der Multimediadaten im Rahmen eines durchgängigen Navigationskonzeptes auswählbar und abrufbar sind.

3. Streamingportal gemäß Anspruch 1 oder 2, **dadurch gekennzeichnet, daß**
die Multimedia-Daten zur Wiedergabe auf dem Streamingportal in einem für alle Daten des Streamingportals gemeinsam gestalteten und den Informationsanbieter kennzeichnenden Darstellungsrahmen vorgesehen sind.

4. Streamingportal gemäß einem der vorhergehenden Ansprüche, **dadurch gekennzeichnet, daß** der Programminhalt ein Femseh- und/oder Rundfunkprogramm ist.

5. Streamingportal gemäß einem der vorhergehenden Ansprüche, **dadurch gekennzeichnet, daß** der Programminhalt eine Anzahl vorbestimmter Kriterien zur Ermittlung der Strukturdaten enthält, insbesondere Kriterien aus der Gruppe bestehend aus: Zeit, Thema, Darsteller, Produzent, Regie, lokale Kriterien, Sprache, Aktualität; enthält.

6. Streamingportal gemäß einem der vorhergehenden Ansprüche, **dadurch gekennzeichnet, daß** der kennzeichnende Darstellungsrahmen Kennzeichen aus der Gruppe bestehend aus: Gestaltungsweise des Darstellungsrahmens, Icon für die Stream-Art, Icon für die Art der Multimedia-Daten; aufweist.

7. Streamingportal gemäß einem der vorhergehenden Ansprüche, **gekennzeichnet durch** eine Eingangsseite, insbesondere eine Eingangsseite, die ein Menü aus der Gruppe bestehend aus: Streaming-Kanäle, TV-Angebote, Livestream-Angebote, Audio-Angebote, Interaktiv-Angebote, aktuelle Meldungen; aufweist.

8. Streamingportal gemäß einem der vorhergehenden Ansprüche, **gekennzeichnet durch** eine Verknüpfung mit dem üblichen Internet (Figur 14).

9. Streamingportal gemäß einem der vorhergehenden Ansprüche, **dadurch gekennzeichnet, daß** ein jeweils einer Sendung des Programminhalts zugeordneter Darstellungsrahmen eine weitere Verknüpfung enthält, die Multimedia-Daten zur Verfügung stellt, welche die Sendung betreffen und über die Sendung hinausgehen (Figuren 15, 16).

10. Streamingportal gemäß einem der vorhergehenden Ansprüche, **dadurch gekennzeichnet, daß** eine Anzahl von Darstellungsrahmen gruppiert und einer Sendung zugeordnet sind, wobei die Gruppierung eine der Sendung entsprechende Gestaltungsweise aufweist (Figur 17).

11. Streamingportal gemäß einem der vorhergehenden Ansprüche, **dadurch gekennzeichnet, daß** ein Darstellungsrahmen mehrsprachig aufgebaut ist (Figur 18).

12. Computervorrichtung mit einem Streamingportal gemäß einem der Ansprüche 1 bis 11.

13. Verfahren zum Bereitstellen eines Streamingportals mit wenigstens einem Darstellungsrahmen zur Wiedergabe von Multimedia-Informationen eines Programminhalts eines Informationsanbieters, wobei
- die Multimedia-Informationen für das Streamingportal in Form von Multimedia-Daten zur Verfügung gestellt werden, und
- die Multimedia-Daten in Form einer Anzahl von Daten-Streams wiedergegeben werden,
**dadurch gekennzeichnet, daß**
- eine Struktur der Multimedia-Informationen nach dem Programminhalt ermittelt und in Form von Strukturdaten zur Verfügung gestellt wird,
- die Multimedia-Daten anhand der Strukturdaten in eine Anzahl von Stream-Einheiten unterteilt werden,
- eine Stream-Einheit mit einer die Art der in der Stream-Einheit enthaltenen Multimedia-Daten kennzeichnenden Markierung versehen wird, und
- die Stream-Einheit mit einem den Informationsanbieter kennzeichnenden Darstellungsrahmen zur Wiedergabe in Form eines Daten-Streams versehen wird.

14. Verfahren gemäß Anspruch 13, **dadurch gekennzeichnet, daß** die Multimedia-Daten auf dem Streamingportal in einem für alle Daten des Streamingportals gemeinsam gestalteten und den Informationsanbieter kennzeichnenden Darstellungsrahmen wiedergegeben werden.

15. Verfahren gemäß Anspruch 13 oder 14, **dadurch gekennzeichnet, daß** eine Anzahl der Datenstreams jeweils mit einem den Informationsanbieter kennzeichnenden Darstellungsrahmen auf dem Streamingportal hinterlegt sind und zur Wiedergabe der Multimediadaten im Rahmen eines durchgängigen Navigationskonzeptes auswählbar und abrufbar sind.

16. Verfahren gemäß einem der Ansprüche 13 bis 15, **dadurch gekennzeichnet, daß** die Multimedia-Informationen dem Streamingportal zur Verfügung gestellt werden, indem die Multimedia-Informationen für das Streamingportal mittels einer Empfangseinheit, insbesondere einer Antenne oder einem Kabel-Receiver, empfangen werden und insbesondere in digitalisiertes Informationsmaterial in Form von Multimedia-Daten über einen Wandler umgesetzt werden.

17. Verfahren gemäß einem der Ansprüche 13 bis 16, **dadurch gekennzeichnet, daß** weitere Multimedia-Daten oder weitere Daten über einen Datenspeicher und/oder ein Netzwerk zur Verfügung gestellt werden.

18. Verfahren gemäß einem der Ansprüche 13 bis 17, **dadurch gekennzeichnet, daß** der Programminhalt zusammen mit den Multimedia-Informationen zur Verfügung gestellt wird.

19. Verfahren gemäß einem der Ansprüche 13 bis 18, **dadurch gekennzeichnet, daß** die Markierung in einem Header der Stream-Einheit erfolgt.

20. Verfahren gemäß einem der Ansprüche 13 bis 19, **dadurch gekennzeichnet, daß** der Programminhalt separat von den Multimedia-Informationen zur Verfügung gestellt wird, insbesondere über ein Netzwerk separat zur Verfügung gestellt wird.

21. Computerprogramm-Produkt, welches auf einem computerlesbaren Medium speicherbar ist und einen Softwarecode-Abschnitt aufweist, welcher geeignet ist, eine Computervorrichtung zur Wiedergabe von Multimedia-Informationen eines Programminhalts eines Informationsanbieters auf einem Streamingportal gemäß einem der Ansprüche 1 bis 11 zu veranlassen, wenn das Produkt auf der Computervorrichtung ausgeführt wird.

22. Computerprogramm-Produkt, welches auf einem computerlesbaren Medium speicherbar ist und einen Softwarecode-Abschnitt aufweist, welcher geeignet ist, eine Computervorrichtung zur Ausführung des Verfahrens gemäß einem der Ansprüche 13 bis 20 zu veranlassen, wenn das Produkt auf der Computervorrichtung ausgeführt wird.

23. Computerlesbares Medium, auf dem das Computerprogramm-Produkt gemäß einem der Ansprüche 21 oder 22 gespeichert ist.

24. Computernetzwerk zum Bereitstellen eines Streamingportals, mit wenigstens einem Darstellungsrahmen zur Wiedergabe von Multimedia-Informationen eines Programminhalts eines Informationsanbieters, aufweisend
- eine Empfangseinheit, über welche die Multimedia-Informationen zur Verfügung stellbar sind,
- eine Wandlereinheit, über welche die Multimedia-Informationen als Multimedia-Daten zur Verfügung stellbar sind, wobei die Multimedia-Daten zur Wiedergabe in Form einer Anzahl von Daten-Streams vorgesehen sind,
**gekennzeichnet durch** mindestens ein Computersystem,
- auf dem eine nach dem Programminhalt ermittelte Struktur der Multimedia-Informationen in Form von Strukturdaten zur Verfügung gestellt ist, und
- auf dem die Multimedia-Daten anhand der Strukturdaten in eine Anzahl von Stream-Einheiten unterteilbar sind,
- auf dem eine Stream-Einheit mit einer die Art der in der Stream-Einheit enthaltenen Multimedia-Daten kennzeichnenden Markierung versehbar ist, und
- auf dem die Stream-Einheit mit einem den Informationsanbieter kennzeichnenden Darstellungsrahmen versehbar ist.

25. Computernetzwerk gemäß Anspruch 24, **dadurch gekennzeichnet, daß** eine Anzahl der Datenstreams jeweils mit einem den Informationsanbieter kennzeichnenden Darstellungsrahmen auf dem Streamingportal hinterlegt sind und zur Wiedergabe der Multimediadaten im Rahmen eines durchgängigen Navigationskonzeptes auswählbar und abrufbar sind.

26. Computernetzwerk nach Anspruch 24 oder 25, **gekennzeichnet durch** ein Computersystem, auf dem Multimedia-Daten des Streamingportals in einem für alle Daten des Streamingportals gemeinsam gestalteten und den Informationsanbieter kennzeichnenden Darstellungsrahmen wiedergebbar sind.

27. Computernetzwerk gemäß einem der Ansprüche 24 bis 26, **dadurch gekennzeichnet, daß** die Anzahl von Stream-Einheiten gruppiert sind in Kategorien aus der Gruppe bestehend aus: Streaming, Audio, Interaktiv, Live, TV.

28. Computemetzwerk gemäß einem der Ansprüche 24 bis 27, **dadurch gekennzeichnet, daß** eine Datenübermittlung zwischen den Computersystemen in nach Kategorien getrennten Datenflüssen erfolgt.

29. Computemetzwerk gemäß einem der Ansprüche 24 bis 28, **dadurch gekennzeichnet, daß** eine Datenübermittlung zwischen den Computersystemen über das Internet und/oder ein LAN und/oder ein WAN erfolgt.

30. Computernetzwerk gemäß einem der Ansprüche 24 bis 29, **gekennzeichnet durch** eine Sendeeinheit zur Abwicklung von Livesendungen.

31. Erstes Computersystem zum Bereitstellen eines Streamingportals, mit wenigstens einem Darstellungsrahmen zur Wiedergabe von Multimedia-Informationen eines Programminhalts eines Informationsanbieters, aufweisend
- eine Empfangseinheit, über welche die Multimedia-Informationen zur Verfügung stellbar sind,
- eine Wandlereinheit, über welche die Multimedia-Informationen als Multimedia-Daten zur Verfügung stellbar sind, wobei die Multimedia-Daten zur Wiedergabe in Form einer Anzahl von Daten-Streams vorgesehen sind,
**dadurch gekennzeichnet, daß**
- das erste Computersystem als Capture-System ausgebildet ist,
- auf dem eine nach dem Programminhalt ermittelte Struktur der Multimedia-Informationen in Form von Strukturdaten zur Verfügung gestellt ist,
- auf dem die Multimedia-Daten anhand der Strukturdaten in eine Anzahl von Stream-Einheiten unterteilbar sind, und
- auf dem eine Stream-Einheit mit einer die Art der in der Stream-Einheit enthaltenen Multimedia-Daten kennzeichnenden Markierung versehbar ist, derart, daß die Stream-Einheit mit einem den Informationsanbieter kennzeichnenden Darstellungsrahmen versehbar ist.

32. Erstes Computersystem gemäß Anspruch 31, **dadurch gekennzeichnet, daß**
das Capture-System aufweist:
- eine Capture-Software,
- ein Real-Video-Footage-Raid,
- eine SMIL-Software-Erstellung,
- eine Administrator-Einheit.

33. Verwendung eines ersten Computersystems zum Bereitstellen eines Streamingportals mit wenigstens einem Darstellungsrahmen zur Wiedergabe von Multimedia-Informationen eines Programminhalts eines Informationsanbieters, wobei
- die Multimedia-Informationen für das Streamingportal in Form von Multimedia-Daten zur Verfügung gestellt werden und
- die Multimedia-Daten zur Wiedergabe in Form einer Anzahl von Daten-Streams vorgesehen sind,
**dadurch gekennzeichnet, daß**
das erste Computersystem als Capture-System verwendet wird, in dem
- eine Struktur der Multimedia-Informationen nach dem Programminhalt ermittelt und in Form von Strukturdaten zur Verfügung gestellt wird,
- die Multimedia-Daten anhand der Strukturdaten in eine Anzahl von Stream-Einheiten unterteilt werden, und
- eine Stream-Einheit mit einer für die Art der in der Stream-Einheit enthaltenen Multimedia-Daten kennzeichnenden Markierung versehen wird, so daß die Stream-Einheit zur Wiedergabe in Form eines Daten-Streams mit einem den Informationsanbieter kennzeichnenden Darstellungsrahmen versehbar ist.

34. Zweites Computersystem zum Bereitstellen eines Streamingportals, mit wenigstens einem Darstellungsrahmen zur Wiedergabe von Multimedia-Informationen eines Programminhalts eines Informationsanbieters, dem
- die Multimedia-Informationen in Form von Multimedia-Daten zur Verfügung gestellt sind, wobei
- die Multimedia-Daten zur Wiedergabe in Form einer Anzahl von Daten-Streams vorgesehen sind,
**dadurch gekennzeichnet, daß**
- die Multimedia-Daten anhand von nach dem Programminhalt ermittelten Strukturdaten in eine Anzahl von Stream-Einheiten unterteilt sind, wobei eine Stream-Einheit mit einer die Art der in der Stream-Einheit enthaltenen Multimedia-Daten kennzeichnenden Markierung versehen ist, und
- das zweite Computersystem als Client-System ausgebildet ist, auf dem
- die Stream-Einheit mit einem den Informationsanbieter kennzeichnenden Darstellungsrahmen versehbar ist.

35. Zweites Computersystem gemäß Anspruch 34, **dadurch gekennzeichnet, daß**
das Client-System eine erste Server-Einheit zur Darstellung des Streamingportals aufweist, die als Link-Einheit eingerichtet ist und zur Abwicklung von Streaming-Anfragen vorgesehen ist.

36. Zweites Computersystem gemäß Anspruch 34 oder 35, **dadurch gekennzeichnet, daß** eine Anzahl der Datenstreams jeweils mit einem den Informationsanbieter kennzeichnenden Darstellungsrahmen auf dem Streamingportal hinterlegt sind und zur Wiedergabe der Multimediadaten im Rahmen eines durchgängigen Navigationskonzeptes auswählbar und abrufbar sind.

37. Zweites Computersystem gemäß einem der Ansprüche 34 bis 36, **dadurch gekennzeichnet, daß** das Client-System mit einem zweiten Server verbunden ist, der als dynamischer Real-Video-Server eingerichtet ist und zur Umsetzung, insbesondere Verwaltung, Speicherung und Abwicklung, von Multimedia-Daten für die erste Server-Einheit vorgesehen ist.

38. Zweites Computersystem gemäß einem der Ansprüche 34 bis 37, **dadurch gekennzeichnet, daß** das Client-System ein Einpfleg-System und eine Eingabe-Tool-Sofhware aufweist.

39. Zweites Computersystem gemäß einem der Ansprüche 34 bis 38, **dadurch gekennzeichnet, daß** das Client-System eine Regie- und Steuer-Einheit aufweist.

40. Verwendung eines zweiten Computersystems zum Bereitstellen eines Streamingportals mit wenigstens einem Darstellungsrahmen zur Wiedergabe von Multimedia-Informationen eines Programminhalts eines Informationsanbieters, dem
- die Multimedia-Informationen für das Streamingportal in Form von Multimedia-Daten zur Verfügung gestellt werden, wobei
- die Multimedia-Daten zur Wiedergabe in Form einer Anzahl von Daten-Streams vorgesehen sind,
**dadurch gekennzeichnet, daß**
die Multimedia-Informationen anhand von nach dem Programminhalt ermittelten Strukturdaten in eine Anzahl von Stream-Einheiten unterteilt sind, wobei eine Stream-Einheit mit einer die Art der in der Stream-Einheit enthaltenen Multimedia-Daten kennzeichnenden Markierung versehen ist, und wobei
das zweite Computersystem als Client-System verwendet wird, in dem
- die Stream-Einheit mit einem den Informationsanbieter kennzeichnenden Darstellungsrahmen versehen wird.

41. Drittes Computersystem zum Bereitstellen eines Streamingportals, mit wenigstens einem Darstellungsrahmen zur Wiedergabe von Multimedia-Informationen eines Programminhalts eines Informationsanbieters, dem die Multimedia-Informationen in Form von Multimedia-Daten zur Verfügung gestellt sind, wobei die Multimedia-Daten zur Wiedergabe in Form einer Anzahl von Daten-Streams vorgesehen sind,
**dadurch gekennzeichnet, daß**
die Multimedia-Daten anhand von nach dem Programminhalt ermittelten Strukturdaten in eine Anzahl von Stream-Einheiten unterteilt sind, wobei eine Stream-Einheit mit einer die Art der in der Stream-Einheit enthaltenen Multimedia-Daten kennzeichnenden Markierung versehen ist, und wobei die Stream-Einheit mit einem den Informationsanbieter kennzeichnenden Darstellungsrahmen versehen ist, und
das dritte Computersystem als User-System ausgebildet ist, auf dem
- die Multimedia-Daten auf dem Streamingportal in einem für alle Daten des Streamingportals gemeinsam gestalteten und den Informationsanbieter kennzeichnenden Darstellungsrahmen wiedergebbar sind.

42. Drittes Computersystem gemäß Anspruch 41, **dadurch gekennzeichnet, daß** das User-System einen Multimedia-PC mit On-Screen-Benutzerführung aufweist.

43. Drittes Computersystem gemäß Anspruch 41 oder 442, **dadurch gekennzeichnet, daß** das User System als ein Home-Recorder ausgebildet ist.

44. Verwendung eines dritten Computersystems zum Bereitstellen eines Streamingportals mit wenigstens einem Darstellungsrahmen zur Wiedergabe von Multimedia-Informationen eines Programminhalts eines Informationsanbieters, wobei
- die Multimedia-Informationen für das Streamingportal in Form von Multimedia Daten zur Verfügung gestellt werden und
- die Multimedia-Daten zur Wiedergabe in Form einer Anzahl von Daten-Streams vorgesehen sind,
**dadurch gekennzeichnet, daß**
die Multimedia-Daten anhand von nach dem Programminhalt ermittelten Strukturdaten in eine Anzahl von Stream-Einheiten unterteilt sind, wobei eine Stream-Einheit mit einer eine Art der in der Stream-Einheit enthaltenen Multimedia-Daten kennzeichnenden Markierung versehen ist und die Stream-Einheit zur Wiedergabe in Form eines Daten-Streams mit einem den Informationsanbieter kennzeichnenden Darstellungsrahmen versehen ist, wobei
das dritte Computersystem als User-System verwendet wird, auf dem
- die Multimedia-Daten auf dem Streamingportal in einem für alle Daten des Streamingportals gemeinsam gestalteten und den Informationsanbieter kennzeichnenden Darstellungsrahmen wiedergegeben werden.
